# EUROPÄISCHE PATENTSCHRIFT

(11) **EP 3 908 097 B1**
(45) Veröffentlichungstag und Bekanntmachung des Hinweises auf die Patenterteilung: **26.07.2023**
(21) Anmeldenummer: 19806094.9
(22) Anmeldetag: 11.11.2019
(51) Int. Cl.: A01C 7/10, A01C 7/08

(54) **VERFAHREN ZUR STEUERUNG UND/ODER REGELUNG EINES DOSIERRADES EINER VERTEILMASCHINE UNTER DURCHFÜHRUNG VON ABDREHPROBEN UND HIERFÜR GEEIGNETE VERTEILMASCHINE**
METHOD FOR PERFORMING OPEN-LOOP AND/OR CLOSED-LOOP CONTROL OF A METERING WHEEL OF A DISTRIBUTION MACHINE WHILE CARRYING OUT CALIBRATION TESTS AND DISTRIBUTION MACHINE SUITABLE FOR SAME
PROCÉDÉ DE COMMANDE ET/OU DE RÉGULATION D'UNE ROUE DE DOSAGE D'UNE MACHINE D'ÉPANDAGE EN EFFECTUANT DES TESTS D'ÉTALONNAGE, ET MACHINE D'ÉPANDAGE CONVENANT À CETTE FIN

(30) Priorität: 08.01.2019 DE 102019000047
(43) Veröffentlichungstag der Anmeldung: 17.11.2021
(73) Patentinhaber: RAUCH Landmaschinenfabrik GmbH, 76547 Sinzheim (DE)
(72) Erfinder: RAUCH, Norbert, 01326 Dresden (DE)
(74) Vertreter: Lichti - Patentanwälte Partnerschaft mbB
(86) Internationale Anmeldenummer: PCT/EP2019/000310
(87) Internationale Veröffentlichungsnummer: WO 2020/143894

(56) Entgegenhaltungen:
- EP-A1- 0 495 237
- WO-A1-2018/068896
- DE-A1-102017 005 094

## Beschreibung

Die Erfindung betrifft ein Verfahren zur Steuerung und/oder Regelung wenigstens eines Dosierrades einer Verteilmaschine, umfassend
- wenigstens ein drehangetriebenes Dosierrad;
- wenigstens ein dem Dosierrad nachgeordnetes Verteilorgan zum Verteilen des mittels des Dosierrades dosierten Verteilgutes auf oder in den Boden; und
- wenigstens eine mit dem Dosierrad in Wirkverbindung stehende Steuer- und/oder Regeleinrichtung, welche zur Steuerung und/oder Regelung der Drehzahl des Dosierrades gemäß einem vorherbestimmbaren Soll-Massenstrom an Verteilgut ausgebildet ist,
wobei wenigstens eine Abdrehprobe durchgeführt wird, um den mittels des wenigstens einen Dosierrades dosierten Ist-Massenstrom an Verteilgut auf den Soll-Massenstrom an Verteilgut zu steuern und/oder zu regeln. Die Erfindung bezieht sich ferner eine zur Durchführung eines solchen Verfahrens geeignete Verteilmaschine, umfassend
- wenigstens ein drehangetriebenes Dosierrad;
- wenigstens ein dem Dosierrad nachgeordnetes Verteilorgan zum Verteilen des mittels des Dosierrades dosierten Verteilgutes auf oder in den Boden; und
- wenigstens eine mit dem Dosierrad in Wirkverbindung stehende Steuer- und/oder Regeleinrichtung, welche zur Steuerung und/oder Regelung der Drehzahl des Dosierrades gemäß einem vorherbestimmbaren Soll-Massenstrom an Verteilgut ausgebildet ist.

Derartige Verteilmaschinen finden für landwirtschaftliche Zwecke insbesondere in Form von pneumatischen Verteilmaschinen, wie z.B. pneumatischen Sämaschinen, Drillmaschinen und pneumatischen Düngerstreuern, sogenannten Gebläsestreuern, aber beispielsweise auch in Form von Scheibendüngerstreuern Verwendung. Sie existieren einerseits in leichter Bauart als Anbaugeräte, welche mit dem Dreipunkt einer Zugmaschine, wie eines Traktors, gekoppelt werden können, anderseits können sie in schwerer Bauart auf einen achsgestützten Nachläufer oder einen Selbstfahrer aufgesetzt sein. Während Scheibendüngerstreuer je ein einem jeweiligen Dosierrad nachgeordnetes Verteilorgan in Form einer mit Wurfschaufeln versehenen, drehangetriebenen Verteilerscheibe aufweisen, umfassen pneumatische Verteilmaschinen üblicherweise einen oder eine Mehrzahl an seitlich nach außen ragenden Auslegern, welche in unterschiedlichem Abstand voneinander endende Verteilerleitungen aufnehmen. Zur Förderung des Verteilgutes dient ein Gebläse, dessen Druckleitung in einen Druckverteiler mündet, an welchen sich mehrere Verteilerleitungen anschlie-βen. Zwischen dem Druckverteiler und den Verteilerleitungen angeordnete Übergabekammern, welche beispielsweise mit Injektoren ausgestattet sein können, dienen zur Übergabe des Verteilgutes von einem jeweiligen Dosierrad an die Verteilerleitungen, um sicherzustellen, dass jeder Verteilerleitung die Menge an Verteilgut aufgegeben wird, welche mittels des sich an die Verteilerleitung anschließenden Verteilorgans ausgebracht werden soll. Alternativ kann sich an den Auslass eines jeweiligen Dosierrades auch nur eine Förderleitung anschließen, welche in einen oder in einen jeweiligen Verteilerkopf führt, von welchem eine Mehrzahl an Verteilerleitungen abgehen. Das Verteilgut wird schließlich pneumatisch über die nach außen umgelenkten Verteilerleitungen bis zu deren Ende gefördert, wo das Verteilgut auf Verteilorgane, welche üblicherweise von Prallplatten oder Säscharen gebildet sind, auftrifft und von dort im Wesentlichen fächerförmig (im Falle von Prallplatten) oder etwa linienförmig (im Falle von Säscharen) auf dem Boden abgelegt oder auch in eine in dem Boden erzeugte Furche eingebracht wird. Der Hauptvorteil von Pneumatikstreuern gegenüber mit Verteilerscheiben ausgestatteten Scheibenstreuern besteht hierbei insbesondere darin, dass sie über eine größere Streubreite eine gleichmäßigere Verteilung des Verteilgutes zu bewerkstelligen vermögen. Ein derartiger Pneumatikstreuer ist beispielsweise aus der DE 10 2004 030 240 A1 bekannt.

Die DE 10 2017 005 094 A1 beschreibt eine weitere Verteilmaschine in Form eines landwirtschaftlichen Pneumatikstreuers zum Ausbringen von Verteilgut, wie Dünger und/oder Saatgut, welche wenigstens ein in einem Dosiergehäuse gelagertes, rotierbar angetriebenes Dosierrad zur Dosierung des Verteilgutes umfasst. Um für eine exakte Dosierung des Verteilgutes innerhalb fein unterteilter Teilbreiten des Pneumatikstreuers zu sorgen, weist das Dosierrad eine Mehrzahl an mittels eigener Antriebe unabhängig voneinander drehangetrieben Dosierradsegmenten auf, so dass ein jedes Dosierradsegment des Dosierrades mit verschiedenen Drehzahlen betrieben und folglich ein jeweiliges, mittels einer jeweiligen Verteilerleitung mit einem jeweiligen Dosierradsegment in Verbindung stehendes Verteilorgan individuell mit der jeweiligen Soll-Verteilmengen versorgt werden kann. Die Antriebe sind dabei im Innern eines im Wesentlichen rohrförmigen Hohlkörpers angeordnet, an dessen Mantelfläche die Dosierradsegmente des Dosierrades gelagert sind.

Zur Dosierung des Verteilgutes, wie beispielsweise im Wesentlichen pulver- und/oder partikelförmigem Saatgut und/oder Dünger oder gegebenenfalls auch anderen, z.B. zum Pflanzenschutz dienenden Granulaten, haben sich neben Dosierschiebern, wie sie vornehmlich bei Scheibenstreuern zum Einsatz gelangen, insbesondere drehangetriebene Dosierräder bewährt, welche üblicherweise in einem Dosiergehäuse mit einem an dessen Oberseite angeordneten Einlass und einem an dessen Unterseite angeordneten Auslass gelagert sind. Das Dosierrad kann dabei je nach verwendetem Verteilgut beispielsweise im Wesentlichen in Form eines Zellen- oder Nockenrades ausgestaltet sein, wobei das Dosierrad - wie bereits erwähnt - in der Regel zwei oder mehr Dosierradsegmente, z.B. in Form von Nocken- und/oder Zellenradsegmenten, aufweisen kann, welche gemeinsam oder auch unabhängig voneinander drehangetrieben sind. Durch Veränderung der Drehgeschwindigkeit des Dosierrades bzw. eines jeweiligen Dosierradsegmentes desselben mittels einer hiermit in Wirkverbindung stehenden Steuer- und/oder Regeleinrichtung der Verteilmaschine lässt sich die Dosiermenge des in den zwischen den Nockenbergen angeordneten Nockentälern bzw. in den Zellen angereicherten Verteilgutes auf einfache Weise steuern und/oder regeln.

Die Form des Dosierrades bzw. dessen Dosierradsegmente muss grundsätzlich an den jeweiligen Saatgut- und/oder Düngertyp angepasst sein, um eine einwandfreie Dosierung mit dem gewünschten Massenstrom unter Vermeidung von auch nur lokalen Unter- oder Überdosierungen zu vermeiden. Dies hängt vornehmlich damit zusammen, dass für partikuläre Düngemittel und für gleichfalls partikuläres, aber demgegenüber feinpartikuläreres sowie insbesondere gegenüber mechanischen Einwirkungen deutlich empfindlicheres Saatgut unterschiedliche Dosierräder erforderlich sind. So stellen für Düngemittel vornehmlich die vorgenannten Nockenräder das Mittel der Wahl dar, weil die üblicherweise hygroskopischen Düngerpartikel zum Anbacken an dem Dosierrad neigen und von Dosierrädern in Form von Zellenradwalzen zumindest während des Betriebs praktisch nicht entfernt werden können. Von Nockenrädern hingegen lassen sich derartige Anbackungen mittels geeigneter Reinigungseinrichtungen auch während des Betriebs entfernen, wobei solche Reinigungseinrichtungen z.B. zwischen die Nockenberge des Nockenrades und/oder zwischen einzelne Nockenradsegmente, aus welchen das Nockenrad gebildet ist, eingreifende Stifte umfassen können, um anhaftende Düngerpartikel von dem Nockenrad "abkratzen" zu können. Für die präzise Dosierung von Saatgut stellen demgegenüber andersartige Dosierräder das Mittel der Wahl dar, wie insbesondere Zellenräder sowie Loch- oder Nutenräder, deren Mantelfläche mit lochartigen oder, sich insbesondere in Umfangrichtung erstreckenden, nutförmigen Vertiefungen ausgestattet sind, welche das zu dosierende Saatgut schonend aufnehmen können.

Um das oder die Dosierräder von gattungsgemäßen Verteilmaschinen auf einen gewünschten Soll-Massenstrom an Verteilgut zu regeln, beschreibt beispielsweise die DE 10 2014 115 020 A1 ein Regelverfahren für eine pneumatische Verteilmaschine, bei welchem der Ist-Massenstrom der in den Förderluftstrom eindispergierten Verteilgutpartikel in der Förderleitung mittels eines Sensors, wie eines Piezosensors, erfasst und an eine Regeleinrichtung der Verteilmaschine übermittelt wird, welche eine Stellgröße in Abhängigkeit des Soll-Massenstroms bestimmt und die Dosierräder dementsprechend auf den Soll-Massenstrom regelt. Hierbei soll ständig ein Korrekturfaktor als Verhältnis des Ist-Massenstroms in Bezug auf die Ist-Drehzahl bzw. -frequenz des Dosierrade ermittelt werden, so dass der Soll-Massenstrom mit Hilfe des Korrekturfaktors in eine Soll-Drehzahl bzw. -frequenz des Dosierorgans umgewandelt werden kann. Die Regeleinrichtung ermittelt die auf das Dosierrad wirkende Stellgröße - hier: die Drehzahl bzw. -frequenz - in Abhängigkeit von einer Regelabweichung, welche als Differenz zwischen der Soll-Drehzahl und der Ist-Drehzahl bestimmt wird. Indes haben sich derartige Verfahren auf dem Markt bislang nicht durchsetzen können, weil die sensorische Erfassung des Ist-Massenstroms an fluidisierten Verteilgutpartikeln stark fehlerbehaftet und im Übrigen auch störungsanfällig ist, wobei bereits lokale Ablagerungen und/oder Verschmutzungen zu einem Versagen der Massenstromregelung führen können.

In der Praxis bedient man sich daher nach wie vor der Durchführung von Abdrehproben, indem das mit einem bestimmten Verteilguttyp beaufschlagte Dosierrad mit einer vorherbestimmten Anzahl an Umdrehungen rotiert und die während der Abdrehprobe dosierte Masse an Verteilgut gravimetrisch erfasst wird (vgl. z.B. die DE 33 10 424 A1). Aus der derart erhaltenen Masse an Verteilgut bezogen auf die Anzahl an Umdrehungen des Dosierrades kann sodann eine funktionale Beziehung zwischen der Drehzahl des Dosierorgans und dem hiermit dosierten Massenstrom an Verteilgut errechnet und das Dosierrad anschließend in Abhängigkeit dieser funktionalen Beziehung auf einen Soll-Massenstrom an Verteilgut gesteuert und/oder geregelt werden. Dabei ist es für die Abdrehprobe essentiell, dass das gesamte, während ihrer Durchführung dosierte Verteilgut aufgefangen werden kann, um für eine hohe Genauigkeit der Einstellung des Dosierrades beim späteren Arbeitsgang des Düngens/Säens zu sorgen und auch als "Abdrehfehler" bezeichnete Fehldosierungen, insbesondere Überdosierungen, infolge anlässlich der Abdrehprobe nur teilweise aufgefangenen Verteilgutes sowohl aus wirtschaftlichen Gründen als auch aus Umweltschutzgründen zu vermeiden.

Während in vielen Fällen derartige Abdrehproben vor Beginn der Verteilarbeit manuell durchgeführt werden, indem das Dosierrad in der obigen Weise betätigt und das während der Abdrehprobe dosierte Verteilgut in einem unterhalb des Dosierrades zu platzierenden Probenahmebehälter aufgefangen wird, wonach der Probenahmebehälter mit der aufgefangenen Masse an Verteilgut manuell gewogen und ein die gewünschte Masse an Verteilgut pro Umdrehungen des Dosierrades identifizierender Kennwert einer Steuer- und/oder Regeleinrichtung der Verteilmaschine eingegeben wird (vgl. z.B. die EP 0 635 195 A1, DE 44 31 288 A1, EP 2 022 308 A1, DE 10 2007 044 178 A1 oder DE 20 2014 009 404 U1), ist eine solche Vorgehensweise einerseits für den Landwirt relativ aufwändig, weil zumeist der Raum unterhalb des Dosierrades zum Einbringen eines Probenahmebehälters freigelegt werden muss und hierzu z.B. Auslegerteile oder Injektoren ausgebaut werden müssen. Andererseits lässt die hierdurch erzielte Dosiergenauigkeit oft zu wünschen übrig, weil sich der Ist-Massenstrom desselben Verteilgutes bei gleichbleibender Drehzahl des Dosierorgans während der fortschreitenden Verteilarbeit verändern kann, wie insbesondere infolge von Feuchtigkeit oder aufgrund von Unterschieden von einer Verteilgutcharge zur nächsten beim Nachbefüllen des Vorratsbehälters der Verteilmaschine. Überdies führt eine gravimetrische Erfassung der Kalibriermasse des Verteilgutes mittels mobiler Handwaagen unter Berücksichtigung des erforderlichen - und oft vergessenen - Abzugs des Gewichtes des Probenahmebehälters sowie die manuelle Eingabe der Kalibriermasse in die Steuer- und/oder Regeleinrichtung grundsätzlich zu einer hohen Fehlerhäufigkeit. Diese Fehler können in der Praxis gravierend sein, weil erst nach längerer Arbeitszeit der Verteilmaschine oder gar erst nach dem Abschluss der Verteilarbeit der Dosierfehler erkannt wird. Eine Korrektur ist dann nur noch bei einer versehentlich zu gering dosierten Applikationsmenge möglich, wobei eine solche Korrektur aber zumindest eine Wiederholung der gesamten Verteilarbeit auf möglicherweise mehreren 100 ha Fläche erfordert. Zudem kommt eine zu gering dosierte Applikationsmenge seltener vor, weil in diesem Fall eine zu hohe Kalibriermasse oder eine unpassende Anzahl an Umdrehungen des Dosierrades in die Steuer- und/oder Regeleinrichtung eingegeben worden ist. In der Praxis wird jedoch zumeist versehentlich eine zu geringe Kalibriermasse an Verteilgut und/oder eine unpassende Anzahl an entsprechenden Umdrehungen des Dosierrades in die Steuer- und/oder Regeleinrichtung eingegeben, was zu einer zu hohen Applikationsmenge auf dem Feld führt, welche nicht mehr korrigiert werden kann und in hohen wirtschaftlichen sowie Umweltschäden resultiert.

Es sind daher auch gattungsgemäße, insbesondere pneumatische Verteilmaschinen bekannt, bei welchen die Abdrehproben einerseits in weitgehend automatisierter Form, andererseits zu verschiedenen Zeitpunkten während Unterbrechungen der Verteilarbeit durchgeführt werden können, wie beispielsweise während des Wendens der Verteilmaschine im Vorgewende etc., um die funktionale Beziehung zwischen der Anzahl an Umdrehungen des Dosierrades und der hiermit dosierten Ist-Masse bzw. dem Ist-Massenstrom an Verteilgut stets aktuell zu halten und folglich für eine fortwährend hohe Dosiergenauigkeit zu sorgen.

So beschreibt beispielsweise die DE 101 34 991 A1 eine pneumatische Drillmaschine mit einem Saatgutbehälter, einem in Form eines Zellenrades ausgestalteten Dosierrad sowie einer Zähleinrichtung für die Auszählung der Verteilgutpartikel, welche anlässlich automatisierter Abdrehproben dosiert worden sind. Die Zähleinrichtung ist als pneumatische Zähleinrichtung ausgebildet und umfasst ein Zählrad mit in dessen Außenbereich mit Abstand voneinander angeordneten Bohrungen, eine die Verteilgutpartikel in die Bohrungen saugende Ansaugeinrichtung und eine Partikelabscheideeinrichtung, welche die angesaugten Partikel aus den Bohrungen abscheidet. Zwei Sensoren, welche jeweils in Drehrichtung des Zählrades vor und hinter der Partikelabscheideeinrichtung angeordnet sind, dienen zum Zählen der während der Abdrehprobe dosierten Verteilgutpartikel, wobei das Ergebnis dieser Zählung an eine Regeleinrichtung übermittelt wird, welche das Dosierrad entsprechend der gewünschten Verteilung regelt. Die Zähleinrichtung ist oberhalb des Saatgutbehälters angeordnet, wobei in einem zwischen dem Dosierrad und dem Verteilerkopf angeordneten Abschnitt der Förderleitung eine Weiche vorgesehen ist, welche während der Durchführung einer Abdrehprobe die hierbei dosierten Verteilgutpartikel zu der Zähleinrichtung umleitet, wohingegen sie diese während der Verteilarbeit der in Form eines Verteilerkopfes ausgestalteten Verteileinheit zuleitet. Abgesehen von der in konstruktiver Hinsicht aufwändigen Ausgestaltung der Partikelzähleinrichtung besteht ein Nachteil insbesondere darin, dass sich die während einer Abdrehprobe zu der Zähleinrichtung im Kreislauf geführten Verteilgutpartikeln an vielen Stellen der Verteilmaschine anreichern bzw. zurückbleiben können, wie beispielsweise im Injektor oder in der Förderleitung selbst, so dass die Gefahr von Dosierfehlern besteht, wenn nicht alle Verteilgutpartikel gezählt werden können. Darüber können Abdrehproben - wie auch im gesamten Stand der Technik - ausschließlich während Unterbrechungen der Verteilarbeit durchgeführt werden, weil die hierbei dosierten Verteilgutpartikel mittels der Weiche an die im Saatgutbehälter angeordnete Zähleinrichtung umgeleitet werden müssen. Überdies gestaltet sich die Abdrehprobe als relativ zeitaufwändig.

Der Erfindung liegt die Aufgabe zugrunde, ein Verfahren zur Steuerung und/oder Regelung wenigstens eines Dosierrades einer Verteilmaschine der eingangs genannten Art sowie eine zur Durchführung eines solchen Verfahrens geeignete Verteilmaschine unter zumindest weitestgehender Vermeidung der vorgenannten Nachteile dahingehend weiterzubilden, dass eine automatisierte Durchführung von Abdrehproben zu praktisch beliebigen Zeitpunkten während der Verteilarbeit mit hoher Genauigkeit sichergestellt ist.

In verfahrenstechnischer Hinsicht wird diese Aufgabe bei einem Verfahren der eingangs genannten Art dadurch gelöst, dass die Abdrehprobe an einem separaten, drehangetriebenen Kalibrier-Dosierrad mit einer diesem nachgeordneten Wiegeeinrichtung durchgeführt wird, wobei
- das Kalibrier-Dosierrad mit einer vorherbestimmten Anzahl an Umdrehungen rotiert und die mittels des Kalibrier-Dosierrades während dieser Abdrehprobe dosierte Kalibrier-Masse an Verteilgut gravimetrisch erfasst wird,
- die derart erhaltene Kalibrier-Masse an Verteilgut bezogen auf die Anzahl an Umdrehungen des Kalibrier-Dosierrades an die Steuer- und/oder Regeleinrichtung übermittelt wird, um hieraus die mittels des wenigstens einen Dosierrades dosierte Ist-Masse an Verteilgut bezogen auf die Anzahl an Umdrehungen des wenigstens einen Dosierrades zu bestimmen, und
- die Drehzahl des wenigstens einen Dosierrades mittels der Steuer- und/oder Regeleinrichtung in Abhängigkeit von dieser Ist-Masse an Verteilgut bezogen auf die Anzahl an Umdrehungen des wenigstens einen Dosierrades auf den Soll-Massenstrom an Verteilgut gesteuert und/oder geregelt wird.

In vorrichtungstechnischer Hinsicht sieht die Erfindung zur Lösung dieser Aufgabe bei einer Verteilmaschine der eingangs genannten Art ferner vor, dass die Verteilmaschine ein separates, drehangetriebenes Kalibrier-Dosierrad und eine dem separaten Kalibier-Dosierrad nachgeordnete Wiegeeinrichtung aufweist, welche mit der Steuer- und/oder Regeleinrichtung in Verbindung stehen, um
- das Kalibrier-Dosierrad zur Durchführung von Abdrehproben mit einer vorherbestimmten Anzahl an Umdrehungen zu rotieren und die mittels des Kalibrier-Dosierrades während einer solchen Abdrehprobe dosierte Kalibier-Masse an Verteilgut mittels der Wiegeeinrichtung gravimetrisch zu erfassen,
- aus der derart erhaltenen Kalibrier-Masse an Verteilgut bezogen auf die Anzahl an Umdrehungen des Kalibrier-Dosierrades die mittels des wenigstens einen Dosierrades dosierte Ist-Masse an Verteilgut bezogen auf die Anzahl an Umdrehungen des wenigstens einen Dosierrades mittels der Steuer- und/oder Regeleinrichtung zu bestimmen, und
- die Drehzahl des wenigstens einen Dosierrades in Abhängigkeit von dieser Ist-Masse an Verteilgut bezogen auf die Anzahl an Umdrehungen des wenigstens einen Dosierrades auf den Soll-Massenstrom an Verteilgut zu steuern und/oder zu regeln.

Die erfindungsgemäße Ausgestaltung sieht folglich zur z.B. bedarfsweise initiierten oder automatisch in regelmäßigen Zeitabständen vonstatten gehenden Durchführung von Abdrehproben ein separates Kalibrier-Dosierrad mit einer diesem nachgeordneten Wiegeeinrichtung vor, so dass das eigentliche, zur Dosierung des Verteilgutes vorgesehene Dosierrad, von welchem das Verteilgut an die Verteilorgane überführt wird, stets für die Verteilarbeit zur Verfügung steht, die Abdrehproben mittels des Kalibrier-Dosierrades folglich in beliebigen Betriebszuständen der Verteilmaschine durchgeführt werden können und zudem keine aufwändige Rückführung von anlässlich einer Abdrehprobe mittels des eigentlichen Dosierrades dosierten Verteilgutes in einen Vorratsbehälter der Verteilmaschine, wie es der Stand der Technik vorsieht, erforderlich ist. Darüber hinaus erfordert die erfindungsgemäße Ausgestaltung aufgrund der dem Kalibrier-Dosierrad zugeordneten Wiegeeinrichtung keinen menschlichen Eingriff weder in den eigentlichen Abdreh- noch in den Wiegevorgang, anlässlich dessen Messfehler auftreten können, sei es infolge eines falschen Ablesens der gravimetrisch erfassten Masse, sei es infolge eines Verlustiggehens eines Teils der anlässlich der Abdrehprobe dosierten Verteilgutmasse oder sei es infolge anderer Unachtsamkeiten des Bedieners. Wie weiter unten noch näher erläutert, wurde dabei überraschenderweise gefunden, dass der anlässlich der Abdrehprobe mittels des Kalibrier-Dosierrades und der diesem zugeordneten Wiegeeinrichtung erhaltene Ist-Wert der bei einer vorgegebenen Anzahl an Umdrehungen des Kalibrier-Dosierrades, welche selbstverständlich nicht notwendigerweise ein ganzzahlig Vielfaches von 1 sein muss, dosierten Kalibrier-Masse an Verteilgut pro Umdrehungen des Kalibrier-Dosierrades für die mittels des eigentlichen Dosierrades bei einer entsprechenden Anzahl an Umdrehungen dosierte Ist-Masse an Verteilgut repräsentativ ist, so dass die Kalibrier-Masse einfach in die Ist-Masse umgerechnet werden kann, um für ein jeweiliges Verteilgut den mittels des eigentlichen Dosierrades dosierten Ist-Massenstrom an Verteilgut pro Drehzahl des Dosierrades zu bestimmen. Da die Abdrehprobe dabei zu beliebigen Zeitpunkten durchgeführt werden kann, werden hierbei auch etwaige Änderungen der physikalischen Eigenschaften des jeweiligen Verteilgutes, wie beispielsweise eine Veränderung dessen Dichte und/oder Rieselfähigkeit - sei es aufgrund Absorption von Feuchtigkeit bei in der Regel hygroskopischen Verteilgütern und/oder sei es von einer Verteilgutcharge zur nächsten -, sehr schnell erfasst und bei der Steuerung und/oder Regelung des wenigstens einen Dosierrades auf den Soll-Massenstrom an Verteilgut berücksichtigt. Darüber hinaus gewährleistet die erfindungsgemäße Ausgestaltung eine vollautomatisierte Durchführung der Abdrehproben, weil die anlässlich der Abdrehproben erhaltene Kalibrier-Masse an Verteilgut bezogen auf die Anzahl an Umdrehungen des Kalibrier-Dosierrades ohne menschlichen Eingriff an die Steuer- und/oder Regeleinrichtung der Verteilmaschine übermittelt wird - sei es beispielsweise drahtlos, z.B. mittels WLAN-, Bluetooth-, Infrarot-, Mobilfunk-Schnittstellen oder dergleichen oder sei es körperlich, z.B. mittels geeigneter Datenkabel -, um dort die mittels des wenigstens einen Dosierrades dosierte Ist-Masse an Verteilgut bezogen auf die Anzahl an Umdrehungen des wenigstens einen Dosierrades zu bestimmen und hiervon abhängig die Drehzahl des wenigstens einen Dosierrades auf den gewünschten Soll-Massenstrom an Verteilgut zu steuern und/oder zu regeln. Der Antrieb der Kalibrier-Dosierrades und der diesem zugeordneten Wiegeeinrichtung kann dabei zweckmäßigerweise jenem des wenigstens einen Dosierrades entsprechen und insbesondere elektrisch, aber z.B. auch hydraulisch sein. Die exakte Anzahl an Umdrehungen des Kalibrier-Dosierrades und des wenigstens einen Dosierrades kann in als solcher aus dem Stand der Technik bekannten Weise sensorisch erfasst werden.

Zur Umrechnung der anlässlich der Abdrehprobe erhaltenen Kalibrier-Masse an Verteilgut bezogen auf die Anzahl an Umdrehungen des Kalibrier-Dosierrades in die mittels des wenigstens einen Dosierrades dosierte Ist-Masse an Verteilgut bezogen auf die Anzahl an Umdrehungen des wenigstens einen Dosierrades kann in vorteilhafter Ausgestaltung vorgesehen sein, dass in der Steuer- und/oder Regeleinrichtung wenigstens eine funktionale Beziehung hinterlegt wird, um die mittels des Kalibrier-Dosierrades dosierte Kalibrier-Masse an Verteilgut bezogen auf die Anzahl an Umdrehungen des Kalibrier-Dosierrades in die mittels des wenigstens einen Dosierrades dosierte Ist-Masse an Verteilgut bezogen auf die Anzahl an Umdrehungen des Dosierrades umzurechnen, wobei es sich bei der funktionalen Beziehung beispielsweise um Kennlinien, Kennfelder oder andere mathematische Funktionen handeln kann. Wie als solches aus dem Stand der Technik bekannt, kann zur Errechnung des mittels des wenigstens einen Dosierorgans dosierten Ist-Massenstrom an Verteilgut in Abhängigkeit von dessen Drehzahl in ähnlicher Weise vorgesehen sein, dass wenigstens eine funktionale Beziehung hinterlegt wird, welche die Abhängigkeit des mittels des wenigstens einen Dosierrades dosierten Massenstroms an Verteilgut von der Drehzahl des wenigstens einen Dosierrades wiedergibt, um die Drehzahl des wenigstens einen Dosierrades auf den Soll-Massenstrom an Verteilgut zu steuern und/oder zu regeln.

Bei einer zur Durchführung eines solchen Verfahrens ausgebildeten Verteilmaschine kann folglich in vorteilhafter Ausgestaltung vorgesehen sein, dass in der Steuer- und/oder Regeleinrichtung bzw. in einer mit dieser in Verbindung stehenden elektronischen Speichereinrichtung
- wenigstens eine funktionale Beziehung hinterlegt ist, um die mittels des Kalibrier-Dosierrades dosierte Kalibrier-Masse an Verteilgut bezogen auf die Anzahl an Umdrehungen des Kalibrier-Dosierrades in die mittels des wenigstens einen Dosierrades dosierte Ist-Masse an Verteilgut bezogen auf die Anzahl an Umdrehungen des Dosierrades umzurechnen; und/oder
- wenigstens eine funktionale Beziehung hinterlegt ist, welche die Abhängigkeit des mittels des wenigstens einen Dosierrades dosierten Massenstroms an Verteilgut von der Drehzahl des wenigstens einen Dosierrades wiedergibt, um die Drehzahl des wenigstens einen Dosierrades auf den Soll-Massenstrom an Verteilgut zu steuern und/oder zu regeln.

Gemäß einer vorteilhaften Weiterbildung kann vorgesehen sein, dass das wenigstens eine Dosierrad eine Mehrzahl an mittels der Steuer- und/oder Regeleinrichtung unabhängig voneinander drehangetriebenen Dosierradsegmenten aufweist, wobei die Drehzahl eines jeweiligen Dosierradsegmentes in Abhängigkeit von der für eine jeweilige, mittels eines jeweiligen Dosierradradsegmentes dosierten Ist-Masse an Verteilgut bezogen auf die Anzahl an Umdrehungen des Dosierradsegmentes auf den jeweiligen Soll-Massenstrom an Verteilgut gesteuert und/oder geregelt wird.

In vorrichtungstechnischer Hinsicht kann in diesem Zusammenhang demnach vorzugsweise vorgesehen sein, dass das wenigstens eine Dosierrad eine Mehrzahl an mittels der Steuer- und/oder Regeleinrichtung unabhängig voneinander drehangetriebenen Dosierradsegmenten aufweist, wobei die Steuer- und/oder Regeleinrichtung zur Steuerung und/oder Regelung der Drehzahl eines jeweiligen Dosierradsegmentes auf den jeweiligen Soll-Massenstrom an Verteilgut in Abhängigkeit von der für eine jeweilige, mittels eines jeweiligen Dosierradsegmentes dosierten Ist-Masse an Verteilgut bezogen auf die Anzahl an Umdrehungen des Dosierradsegmentes ausgebildet ist. Ein solches Dosierrad ist beispielsweise aus der eingangs zitierten DE 10 2017 005 094 A1 bekannt, welche hiermit ausdrücklich zum Gegenstand der vorliegenden Offenbarung gemacht wird. Bei einer mit einem oder mehreren solcher Dosierräder ausgestatten Verteilmaschine bietet sich insbesondere die Möglichkeit, einem jeweiligen Verteilorgan je eines der Dosierradsegmente des Dosierrades zuzuordnen, so dass jedes Verteilorgan mit einer individuell einstellbaren Soll-Verteilungsmenge an Verteilgut versorgt werden kann, wobei durch Stillsetzung einzelner Dosierradsegmente selbstverständlich auch einzelne Verteilorgane außer Betrieb gesetzt werden können, um für eine exakte Teilbreitenschaltung zu sorgen.

Sofern das wenigstens eine Dosierrad verschiedene und/oder gegeneinander austauschbare Dosierradsegmente unterschiedlicher Geometrie aufweist (vgl. z.B. die EP 2 786 649 B1 oder die zum Prioritätsdatum der vorliegenden Anmeldung noch nicht veröffentlichte deutsche Patentanmeldung 10 2018 006 660.7), so kann in Bezug auf die konstruktive Ausgestaltung des Kalibrier-Dosierrades gemäß einer ersten Ausführungsvariante beispielsweise vorgesehen sein, dass das Kalibrier-Dosierrad verschiedene und/oder gegeneinander austauschbare Kalibrier-Dosierradsegmente aufweist, wobei zur Durchführung der Abdrehprobe jeweils das dem jeweiligen Dosierradsegment des Dosierrades entsprechende Kalibrier-Dosierradsegment verwendet wird, um die mittels des jeweiligen Kalibrier-Dosierradsegmentes des Kalibrier-Dosierrades anlässlich der Abdrehprobe erhaltene Kalibrier-Masse an Verteilgut bezogen auf die Anzahl an Umdrehungen des Kalibrier-Dosierradsegmentes an die Steuer- und/oder Regeleinrichtung zu übermitteln und hieraus die mittels des jeweiligen Dosierradsegmentes des Dosierrades dosierte Ist-Masse an Verteilgut bezogen auf die Anzahl an Umdrehungen des jeweiligen Dosierradsegmentes zu bestimmen, wobei die Drehzahl des jeweiligen Dosierradsegmentes des Dosierrades mittels der Steuer- und/oder Regeleinrichtung in Abhängigkeit von dieser Ist-Masse an Verteilgut bezogen auf die Anzahl an Umdrehungen des jeweiligen Dosierradsegmentes des Dosierrades auf den Soll-Massenstrom an Verteilgut gesteuert und/oder geregelt wird. Das Kalibrier-Dosierrad kann dabei beispielsweise wenigstens ein Kalibrier-Zellenradsegment und wenigstens ein Kalibrier-Nockenradsegment sowie gegebenenfalls weitere Kalibrier-Dosierradsegmente, wie Loch-, Nutenradsegmente oder dergleichen, welche zur Durchführung von Abdrehproben entsprechend der Dosierradsegmente des eigentlichen, wenigstens einen Dosierrades ausgewählt werden. Die Bestimmung der mittels des wenigstens einen Dosierrades dosierten Ist-Masse an Verteilgut bezogen auf die Anzahl an Umdrehungen des Dosierrades aus der mittels des jeweiligen Kalibrier-Dosierradsegmentes erhaltenen Kalibrier-Masse an Verteilgut bezogen auf die Anzahl an Umdrehungen des jeweiligen Kalibrier-Dosierradsegmentes kann in diesem Fall insbesondere anhand verschiedener funktionaler Beziehungen geschehen, welche für die verschiedenartigen Dosierradsegmente des wenigstens einen Dosierrades bzw. des Kalibrier-Dosierrades freilich verschieden sein können, wobei die "richtige" funktionale Beziehung zweckmäßigerweise automatisch mittels der Steuer- und/oder Regeleinrichtung ausgewählt wird, je nach dem, welcher (Kalibrier-)Dosierradtyp sich gerade im Betrieb befindet. Dies kann beispielsweise sensorisch geschehen, indem ein jeweiliger (Kalibrier-)Dosierradtyp anhand einer Identifikation sensorisch erkannt wird, oder auch auf beliebige andere bekannte Weise.

Falls das wenigstens eine Dosierrad verschiedene und/oder gegeneinander austauschbare Dosierradsegmente unterschiedlicher Geometrie aufweist, so kann bei einer zur Durchführung der vorgenannten ersten Ausführungsvariante des erfindungsgemäßen Verfahrens ausgebildeten Verteilmaschine demnach beispielsweise vorgesehen sein, dass das Kalibrier-Dosierrad verschiedene und/oder gegeneinander austauschbare Kalibrier-Dosierradsegmente aufweist, wobei die Steuer- und/oder Regeleinrichtung anlässlich der Durchführung der Abdrehprobe zur Auswahl des dem jeweiligen Dosierradsegment des Dosierrades entsprechenden Kalibrier-Dosierradsegmentes ausgebildet ist, um aus der mittels des jeweiligen Kalibrier-Dosierradsegmentes des Kalibrier-Dosierrades anlässlich der Abdrehprobe erhaltenen Kalibrier-Masse an Verteilgut bezogen auf die Anzahl an Umdrehungen des Kalibrier-Dosierradsegmentes die mittels des jeweiligen Dosierradsegmentes des wenigstens einen Dosierrades dosierte Ist-Masse an Verteilgut bezogen auf die Anzahl an Umdrehungen des jeweiligen Dosierradsegmentes zu bestimmen, wobei die Steuer- und/oder Regeleinrichtung ferner zur Steuerung und/oder Regelung der Drehzahl des jeweiligen Dosierradsegmentes des Dosierrades in Abhängigkeit von dieser Ist-Masse an Verteilgut bezogen auf die Anzahl an Umdrehungen des jeweiligen Dosierradsegmentes des Dosierrades auf den Soll-Massenstrom an Verteilgut ausgebildet ist.

Sofern das wenigstens eine Dosierrad verschiedene und/oder gegeneinander austauschbare Dosierradsegmente unterschiedlicher Geometrie aufweist (vgl. wiederum z.B. die EP 2 786 649 B1 oder die zum Prioritätsdatum der vorliegenden Anmeldung noch nicht veröffentlichte deutsche Patentanmeldung 10 2018 006 660.7), so kann in Bezug auf die konstruktive Ausgestaltung des Kalibrier-Dosierrades gemäß einer zweiten Ausführungsvariante beispielsweise auch vorgesehen sein, dass das Kalibrier-Dosierrad wenigstens ein Standard-Kalibrier-Dosierradsegment aufweist, welches zur Durchführung der Abdrehproben verwendet wird, um die mittels des Standard-Kalibrier-Dosierradsegmentes des Kalibrier-Dosierrades anlässlich der Abdrehprobe erhaltene Kalibrier-Masse an Verteilgut bezogen auf die Anzahl an Umdrehungen des Standard-Kalibrier-Dosierradsegmentes an die Steuer- und/oder Regeleinrichtung zu übermitteln und hieraus die mittels des jeweiligen Dosierradsegmentes des Dosierrades dosierte Ist-Masse an Verteilgut bezogen auf die Anzahl an Umdrehungen des jeweiligen Dosierradsegmentes zu bestimmen, wobei die Drehzahl des jeweiligen Dosierradsegmentes des Dosierrades mittels der Steuer- und/oder Regeleinrichtung in Abhängigkeit von dieser Ist-Masse an Verteilgut bezogen auf die Anzahl an Umdrehungen des jeweiligen Dosierradsegmentes des Dosierrades auf den Soll-Massenstrom an Verteilgut gesteuert und/oder geregelt wird. Das Kalibrier-Dosierrad weist in diesem Fall folglich nur einen einzigen Dosierradtyp, nämlich das eine oder mehrere Standard-Kalibrier-Dosierradsegment(e), welche zur Durchführung von Abdrehproben unabhängig vom Typ der jeweils verwendeten Dosierradsegmente des eigentlichen, wenigstens einen Dosierrades herangezogen werden. Die Bestimmung der mittels des wenigstens einen Dosierrades dosierten Ist-Masse an Verteilgut bezogen auf die Anzahl an Umdrehungen des Dosierrades aus der mittels des Standard-Kalibrier-Dosierradsegmentes erhaltenen Kalibrier-Masse an Verteilgut bezogen auf die Anzahl an Umdrehungen des Standard-Kalibrier-Dosierradsegmentes kann auch in diesem Fall anhand verschiedener funktionaler Beziehungen geschehen, welche für die verschiedenartigen Dosierradsegmente des wenigstens einen Dosierrades verschieden sind, wobei die "richtige" funktionale Beziehung zweckmäßigerweise automatisch mittels der Steuer- und/oder Regeleinrichtung ausgewählt wird, je nach dem, welcher Dosierradtyp sich gerade im Betrieb befindet. Dies kann beispielsweise wiederum sensorisch geschehen, indem ein jeweiliger Dosierradtyp anhand einer Identifikation sensorisch erkannt wird, oder auch beliebige andere bekannte Weise.

Falls das wenigstens eine Dosierrad verschiedene und/oder gegeneinander austauschbare Dosierradsegmente unterschiedlicher Geometrie aufweist, so kann bei einer zur Durchführung der vorgenannten zweiten Ausführungsvariante des erfindungsgemäßen Verfahrens ausgebildeten Verteilmaschine demnach beispielsweise vorgesehen sein, dass das Kalibrier-Dosierrad wenigstens ein Standard-Kalibrier-Dosierradsegment aufweist, um aus der mittels des Standard-Kalibrier-Dosierradsegmentes des Kalibrier-Dosierrades anlässlich der Abdrehprobe erhaltenen Kalibrier-Masse an Verteilgut bezogen auf die Anzahl an Umdrehungen des Standard-Kalibrier-Dosierradsegmentes die mittels des jeweiligen Dosierradsegmentes des wenigstens einen Dosierrades dosierte Ist-Masse an Verteilgut bezogen auf die Anzahl an Umdrehungen des jeweiligen Dosierradsegmentes zu bestimmen, wobei die Steuer- und/oder Regeleinrichtung ferner zur Steuerung und/oder Regelung der Drehzahl des jeweiligen Dosierradsegmentes des Dosierrades in Abhängigkeit von dieser Ist-Masse an Verteilgut bezogen auf die Anzahl an Umdrehungen des jeweiligen Dosierradsegmentes des Dosierrades auf den Soll-Massenstrom an Verteilgut ausgebildet ist.

In vorteilhafter Ausgestaltung kann ferner vorgesehen sein, dass die mittels des Kalibrier-Dosierrades während der Abdrehprobe dosierte Kalibrier-Masse an Verteilgut nach ihrer gravimetrischen Erfassung in einen Vorratsbehälter der Verteilmaschine überführt wird, wobei die Abdrehprobe insbesondere im Innern des Vorratsbehälters durchgeführt und die Kalibrier-Masse an Verteilgut dem Vorratsbehälter entnommen wird. Die Abdrehprobe wird folglich stromauf des eigentlichen, wenigstens einen Dosierrades durchgeführt, so dass sichergestellt ist, dass sich die physikalischen Eigenschaften des Verteilgutes praktisch nicht mehr verändern können, nachdem es nach Durchführung der Abdrehprobe in den Vorratsbehälter überführt worden ist, um es anschließend mittels des wenigstens einen Dosierrades zu dosieren und an ein jeweiliges Verteilorgan zu überführen. Darüber hinaus ist das bereits im Innern des Vorratsbehälters befindliche Verteilgut keinen nennenswerten äußeren Einflüssen mehr ausgesetzt.

In vorrichtungstechnischer Hinsicht kann in diesem Zusammenhang vorteilhafterweise vorgesehen sein, dass das Kalibrier-Dosierrad und die Wiegeeinrichtung im Innern eines Vorratsbehälters der Verteilmaschine angeordnet sind, an dessen wenigstens eine Auslauföffnung sich das wenigstens eine Dosierrad anschließt. Die aus dem Kalibrier-Dosierrad und der Wiegeeinrichtung gebildete Kalibrier-Einheit kann dabei stationär oder insbesondere, beispielsweise mittels Schnellverschlüsse, wie Rast-, Spannbügelverschlüssen oder dergleichen, auswechselbar in dem Vorratsbehälter angeordnet sein, wobei letzterer eine entsprechende Halterung und eine entsprechende elektrische bzw. elektronische und/oder gegebenenfalls auch hydraulische Schnittstelle aufweist, um die Kalibrier-Einheit zu kontaktieren. Auf diese Weise kann die Kalibrier-Einheit z.B. zu Reinigungs- und/oder Wartungszwecken dem Vorratsbehälter entnommen werden, oder ein und dieselbe Kalibrier-Einheit kann für eine Mehrzahl an Verteilmaschinen ähnlicher Bauart Verwendung finden.

Das Kalibrier-Dosierrad und die Wiegeeinrichtung bzw. die aus diesen gebildeten Kalibrier-Einheit kann zweckmäßigerweise in einem Kalibrier-Dosiergehäuse angeordnet sein, welches insbesondere
- eine auf einem Niveau oberhalb des Kalibrier-Dosierrades angeordnete Einlaufstruktur aufweist und/oder
- sich bis auf ein Niveau unterhalb der Wiegeeinrichtung erstreckt.

Die oberhalb des Kalibrier-Dosierrades vorgesehene Einlaufstruktur umfasst vorzugsweise einen Einlauftrichter, um sicherzustellen, dass das in dem Vorratsbehälter der Verteilmaschine befindliche Verteilgut stets dem Kalibier-Dosiergehäuse zugeleitet wird. Bevorzugt umfasst die Einlaufstruktur ferner ein Sieb, einen Rost oder dergleichen, welches bzw. welcher vorzugsweise räumlich schräg angeordnet sein kann, um etwaige Verunreinigungen des Verteilgutes, wie Erdklumpen, Steine etc., welche die Abdrehprobe verfälschen könnten, zuverlässig abzulenken und vor einem Zugang an das Kalibrier-Dosierrad zu bewahren. Die dem Kalibrier-Dosierrad nachgeordnete Wiegeeinrichtung ist gleichfalls vorteilhafterweise in dem Dosiergehäuse angeordnet, so dass ausschließlich die mittels des Kalibrier-Dosierrades dosierte Kalibrier-Masse an Verteilgut vollständig gravimetrisch erfasst zu werden vermag. Darüber hinaus können vorzugsweise Sensoren vorgesehen sein, wie insbesondere ein z.B. im Bereich der Einlaufstruktur des Dosiergehäuses angeordneter Füllstandssensor, welcher die Versorgung des Kalibrier-Dosierrades mit Verteilgut überwacht und insbesondere mit der Steuer- und/oder Regeleinrichtung in Wirkverbindung steht, so dass letztere die Durchführung von Abdrehproben unterbinden und/oder eine Warnmeldung generieren kann, falls das Kalibrier-Dosierrad leerläuft, wenn beispielsweise der Vorratsbehälter bereits praktisch vollständig entleert worden ist. In diesem Fall kann die Steuerung und/oder Regelung des wenigstens einen Dosierrades auf den Soll-Massenstrom an Verteilgut anhand der zuletzt mit "vollem" Kalibrier-Dosierrad durchgeführten Abdrehprobe erfolgen. Ferner kann sich z.B. ein Neigungssensor als zweckmäßig erweisen, um Neigungspositionen der Wiegeeinrichtung, z.B. wenn die Verteilmaschine auf geneigtem Untergrund steht oder sich auf der Fahrt entlang eines Hangs bewegt, zu erfassen und hierdurch bedingte Messfehler bei der gravimetrischen Erfassung der Kalibrier-Masse an Verteilgut zu kompensieren, indem die Steuer- und/oder Regeleinrichtung - beispielsweise wiederum mittels hierin hinterlegter Korrekturfaktoren - den jeweiligen Neigungswinkel berücksichtigt.

Die Wiegeeinrichtung selbst kann beispielsweise zur chargenweise gravimetrischen Erfassung der anlässlich der Abdrehprobe dosierten Kalibrier-Masse an Verteilgut ausgebildet sein und einen stromab des Kalibrier-Dosierrades angeordneten Wiegebehälter aufweisen, welcher insbesondere mittels eines mit der Steuer- und/oder Regeleinrichtung in Wirkverbindung stehenden Aktors nach Durchführung der Abdrehprobe entleerbar ist. Der z.B. ähnlich einer mit einer Wiegeeinrichtung ausgestatteten Behälterwaage ausgestaltete Wiegebehälter ist an seiner Innenseite vorzugsweise mit einem nachgiebigen, reflexionsmindernden Material, wie z.B. Schaumstoff, Gummi, Silikon oder dergleichen, versehen, damit die von dem Kalibrier-Dosierrad dosierten Verteilgutpartikel nicht aus dem Wiegebehälter heraus reflektiert werden können und die gesamte, anlässlich der Abdrehprobe dosierte Kalibrier-Masse an Verteilgut gravimetrisch erfasst werden kann.

Der Wiegebehälter kann ferner zweckmäßigerweise mit einem geeigneten Entleermechanismus versehen sein, wobei der gesamte Wiegebehälter oder dessen Boden beispielsweise, z.B. mittels eines Linear- oder Drehantriebsaktuators, wie eines Stellzylinders, eines (Servo)motors oder dergleichen, kippbar oder der Boden aus dem Wiegebehälter heraus verlagerbar sein kann, um die Kalibrier-Masse an Verteilgut nach ihrer gravimetrischen Erfassung entleeren zu können. Stattdessen kann die Wiegeeinrichtung z.B. auch zur kontinuierlichen gravimetrischen Erfassung der anlässlich der Abdrehprobe dosierten Kalibrier-Masse an Verteilgut ausgebildet sein, wobei die Wiegeeinrichtung im letztgenannten Fall insbesondere als Prallplatten-, Rutschen- oder Bandwaage ausgebildet sein kann.

Wie als solches aus dem Stand der Technik bekannt, macht es das erfindungsgemäße Verfahren selbstverständlich auch möglich, dass bei der Steuerung und/oder Regelung der Drehzahl des wenigstens eines Dosierrades auf den Soll-Massenstrom an Verteilgut in Abhängigkeit von der Ist-Masse an Verteilgut bezogen auf die Anzahl an Umdrehungen des Dosierrades ferner wenigstens ein Verteilparameter aus der Gruppe
- Arbeitsbreite,
- Fahrgeschwindigkeit und
- Soll-Verteilungsmenge pro Fläche an der jeweiligen Ist-Position der Verteilmaschine
berücksichtigt wird. Die Ist-Position der Verteilmaschine kann dabei mittels üblicher Positionserfassungsmittel, wie GPS oder dergleichen, erfasst werden, um z.B. an jeder Stelle eines Feldes die individuelle Soll-Verteilungsmenge gemäß einer elektronischen Applikationskarte ausbringen zu können.

Vor der Durchführung der Abdrehprobe kann das Kalibrier-Dosierrad vorzugsweise zunächst mit einer vorgegebenen Anzahl an Umdrehungen rotiert und das hierbei dosierte Verteilgut verworfen werden, um für die anschließende Abdrehprobe das Dosiervolumen des Kalibrier-Dosierrades im Wesentlichen vollständig zu befüllen. Auf diese Weise wird sichergestellt, dass die Abdrehprobe nicht durch (noch) teilweise nicht gänzlich mit Verteilgut befüllte Zellen oder Nockentäler des Kalibrier-Dosierrades, welche zu einer zu geringen Kalibrier-Masse an Verteilgut führen würden, verfälscht wird. Sofern die Wiegeeinrichtung hierbei einen Wiegebehälter aufweist, kann dieser zum anfänglichen Verwerfen des mittels des Kalibrier-Dosierrades dosierten Verteilgutes z.B. in eine Entleerstellung überführt werden, in welcher er beispielsweise nach unten abgeklappt ist. Alternativ kann ein solcher Wiegebehälter der Wiegeeinrichtung zum anfänglichen Verwerfen des Verteilgutes z.B. auch in einer Aufnahmestellung verbleiben, um ihn zu Beginn der eigentlichen Abdrehprobe, wenn das Kalibrier-Dosierrad gänzlich mit Verteilgut befüllt worden ist, auf "null" zu stellen, um die Kalibrier-Masse an Verteilgut anhand des Taragewichtes, d.h. aus einer Differenz der nach Durchführung der Abdrehprobe aufgefangenen Gesamtmasse an Verteilgut abzüglich der Masse des bereits in dem Wiegebehälter befindlichen Verteilgutes, welche während des Befüllens des Kalibrier-Dosierrades in den Wiegebehälter gelangt ist, zu bestimmen. Die nutzbare Abdrehprobe kann dabei z.B. grundsätzlich mit einer entweder immer gleichen oder dem Volumen/der spezifischen Dichte des jeweiligen Verteilgutes
oder an andere Kriterien angepassten Anzahl an Umdrehungen des Kalibrier-Dosierrades durchgeführt werden. Umfasst die Wiegeeinrichtung einen Wiegebehälter, so ist hierbei selbstverständlich dessen Aufnahmevolumen zu berücksichtigen, um sicherzustellen, dass dieser nicht überläuft und damit das Abdrehprobenergebnis verfälscht würde.

Wie bereits erwähnt, macht die erfindungsgemäße Ausgestaltung insbesondere die Durchführung von Abdrehproben zu beliebigen Zeitpunkten auch während der Verteilarbeit möglich. In diesem Zusammenhang kann beispielsweise vorgesehen sein, dass
- eine Mehrzahl an Abdrehproben nach, insbesondere voreinstellbaren, Zeiträumen durchgeführt wird (d.h. die Abdrehproben werden z.B. automatisch in periodischen Zeitabständen durchgeführt); und/oder
- wenigstens eine Abdrehprobe bedarfsweise durchgeführt wird, indem ein entsprechender Befehl in ein Bedienterminal der Steuer- und/oder Regeleinrichtung eingegeben wird,
wobei insbesondere zumindest die anlässlich der zuletzt durchgeführten Abdrehprobe bestimmte Ist-Masse an Verteilgut bezogen auf die Anzahl an Umdrehungen des Dosierrades gespeichert wird. Darüber hinaus können auch die Ergebniswerte mehrerer oder aller durchgeführter Abdrehproben gespeichert und vorzugsweise in einer beliebigen Form gekennzeichnet werden, z.B. mittels einer Datums-, Zeit- und/oder Chargenkennzeichnung des jeweiligen Verteilgutes. Nach Anwahl eines ausgewählten Abdrehprobenergebnisses können diese Werte beispielsweise auch zur Steuerung und/oder Regelung des Dosierrades aktiviert werden.

Die Steuer- und/oder Regeleinrichtung der Verteilmaschine weist vorzugsweise ein Bedienterminal und/oder eine Anzeigeeinrichtung aufweist, wobei sie insbesondere eine in ein Bedienterminal integrierte Anzeigeeinrichtung aufweist, wie einen berührungsempfindlichen Bildschirm.

Sofern die Steuer- und/oder Regeleinrichtung ein solches Bedienterminal und eine Anzeigeeinrichtung aufweist, so kann dies vorzugsweise ferner dazu genutzt werden, um
- das Ergebnis einer jeweiligen Abdrehprobe auf der Anzeigeeinrichtung anzuzeigen; und/oder
- wenigstens eine aktualisierte funktionale Beziehung, welche die Abhängigkeit der mittels des wenigstens einen Dosierrades dosierten Ist-Masse an Verteilgut bezogen auf die Anzahl an Umdrehungen des wenigstens einen Dosierrades von der mittels des Kalibrier-Dosierrades dosierten Kalibrier-Masse an Verteilgut bezogen auf die Anzahl an Umdrehungen des Kalibrier-Dosierrades beschreibt, in die Steuer- und/oder Regeleinrichtung einzugeben und dort zu hinterlegen, sofern sich die hierfür in der Steuer- und/oder Regeleinrichtung bereits hinterlegte funktionale Beziehung, insbesondere infolge Verschleißes des wenigstens einen Dosierrades und/oder des Kalibrier-Dosierrades oder auch z.B. aufgrund eines Sogeffektes der insbesondere mit Injektoren ausgestatteten Übergabekammern einer pneumatischen Verteilmaschine, verändert hat.

Die letztgenannte Ausführungsform ermöglicht somit die manuelle Eingabe von funktionalen Beziehungen zwischen der Kalibrier-Masse an Verteilgut pro Umdrehungen des Kalibrier-Dosierrades und der Ist-Masse an Verteilgut pro Umdrehungen des wenigstens eines Dosierrades oder die manuelle Eingabe von diesbezüglichen Korrekturfaktoren, um erforderlichenfalls dem Umstand Rechnung zu tragen, dass die in der Steuer- und/oder Regeleinrichtung hierfür bereits hinterlegten funktionalen Beziehungen nach langer Betriebsdauer und hierdurch bedingtem unterschiedlichen Verschleiß des eigentlichen Dosierrades und des Kalibrier-Dosierrades nicht mehr hinreichend exakt sind. In diesem Fall kann eine herkömmliche Abdrehprobe an dem eigentlichen, wenigstens einen Dosierrad vorgenommen werden, wobei die hierbei erhaltene Ist-Masse an Verteilgut pro Umdrehungen des wenigstens einen Dosierrades mit dem hierfür repräsentativen Wert, welcher aus der Kalibrier-Masse an Verteilgut pro Umdrehungen des Kalibrier-Dosierrades erhalten worden ist, verglichen werden kann und die funktionale Beziehung, welche deren Abhängigkeit voneinander beschreibt, erforderlichenfalls korrigiert werden kann. Hinsichtlich der Überprüfung einer Veränderung der funktionalen Beziehung(en) aufgrund eines oben erwähnten Sogeffektes kann beispielsweise an den Verteilorganen die tatsächlich ausgebrachte Kalibrier-Masse an Verteilgut pro Umdrehungen des Dosierrades ermittelt, verglichen und die funktionale Beziehung entsprechend korrigiert werden.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische perspektivische Ansicht einer Ausführungsform einer erfindungsgemäßen landwirtschaftlichen Verteilmaschine in Form eines als Nachläufer ausgestalteten Pneumatikstreuers;
- Fig. 2: eine schematische perspektivische Ansicht der Tragkonstruktion der pneumatischen Verteilmaschine gemäß Fig. 1;
- Fig. 3: eine schematische perspektivische Ansicht der Luftführung der pneumatischen Verteilmaschine gemäß Fig. 1 und 2;
- Fig. 4: einen schematischen Längsschnitt der pneumatischen Verteilmaschine gemäß Fig. 1 bis 3;
- Fig. 5: eine schematische perspektivische Detailansicht der pneumatischen Verteilmaschine gemäß Fig. 1 bis 4 im Bereich eines ihrer Dosierräder;
- Fig. 6: eine schematische perspektivische Schnittansicht des Dosierrades gemäß Fig. 5 mit mehreren, unabhängig voneinander drehangetriebenen Dosierradsegmenten;
- Fig. 7: einen schematischen Längsschnitt durch das Dosierrad gemäß Fig. 6;
- Fig. 8: eine schematische Querschnittansicht des Dosierrades entlang der Schnittebene VIII-VIII gemäß Fig. 7;
- Fig. 9: eine schematische perspektivische Detailansicht eines zur Lagerung der Dosierradsegmente des Dosierrades gemäß Fig. 6 bis 9 dienenden, im Wesentlichen rohrförmigen Hohlkörpers mit hierin aufgenommenen Antrieben der Dosierradsegmente;
- Fig. 10: eine schematische perspektivische Detailansicht eines Abschnittes eines Auslegers der pneumatischen Verteilmaschine gemäß Fig. 1 bis 4 mit mehreren, unter seitlichem Abstand voneinander angeordneten und von je einer Förderleitung mit Teilmassenströmen an dosiertem Verteilgut versorgten Verteilorganen;
- Fig. 11: eine schematische Ansicht der beiden inneren Abschnitte zweier sich jeweils seitlich zur Fahrtrichtung erstreckender Ausleger gemäß Fig. 10 der pneumatischen Verteilmaschine gemäß Fig. 1 bis 4 während der Verteilarbeit;
- Fig. 12: eine schematische perspektivische Detailansicht einer Ausführungsform einer Kalibrier-Einheit mit einem Kalibrier-Dosierrad und einer diesem nachgeordneten Wiegeeinrichtung, welche in einem Kalibrier-Gehäuse untergebracht sind;
- Fig. 13: eine der Fig. 10 entsprechende schematische perspektivische Detailansicht der Kalibier-Einheit mit durchbrochen dargestellten Kalibrier-Dosiergehäuse;
- Fig. 14: eine schematische Seitenansicht des KalibrierDosierrades der Kalibrier-Einheit gemäß Fig. 10 und 11 mit der Wiegeeinrichtung in einer Entleerstellung;
- Fig. 15: eine der Fig. 12 entsprechende Ansicht mit der Wiegeeinrichtung in einer Aufnahmestellung während der Durchführung einer Abdrehprobe; und
- Fig. 16: eine schematische Seitenansicht von der den Fig. 12 und 13 entgegengesetzten Seite zur Veranschaulichung eines Entleermechanismus' der Wiegeeinrichtung.

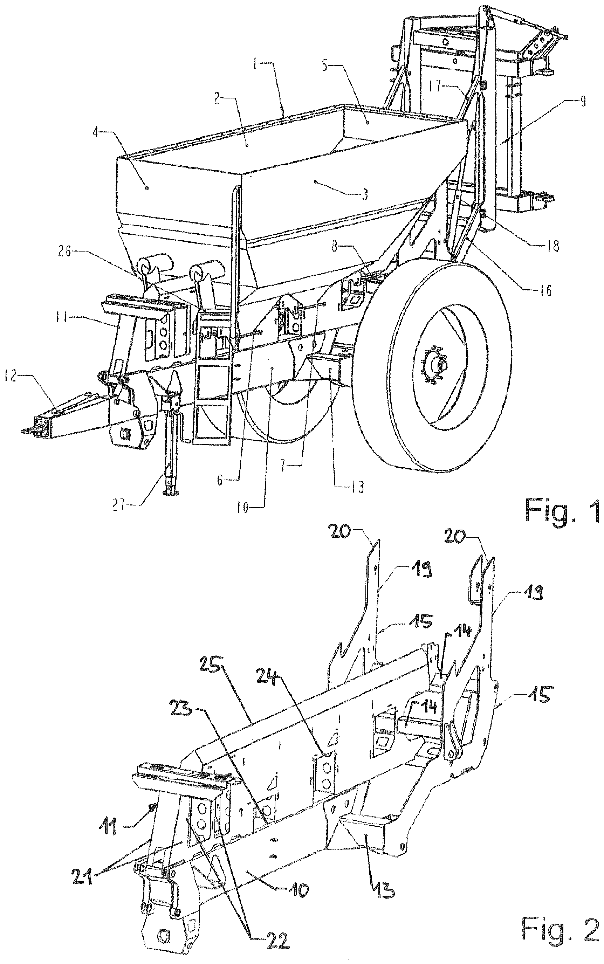

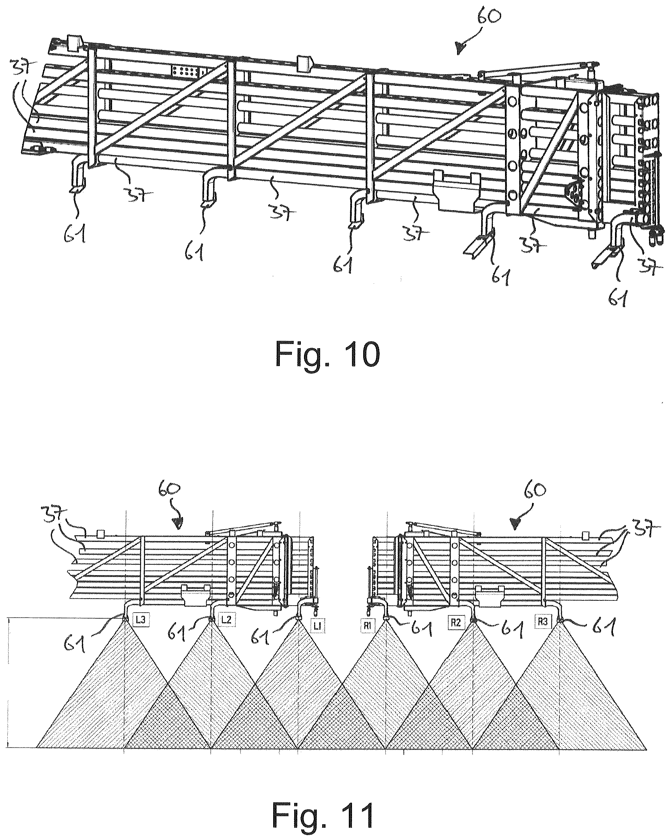

In der Fig. 1 ist ein Ausführungsbeispiel einer - hier pneumatischen - Verteilmaschine in Form eines von einer Zugmaschine, wie einem Traktor, gezogenen einachsigen Nachläufers exemplarisch wiedergegeben, welche als pneumatischer Streuer für pulver- oder partikelförmiges Verteilgut, wie Dünger und/oder Saatgut, ausgebildet ist. In Bezug auf die in der Fig. 1 aus Veranschaulichungsgründen nicht dargestellten, sich quer zur Fahrtrichtung erstreckenden Ausleger mit den zu den einzelnen Verteilorganen führenden Förderleitungen sei auf die Ausführungen weiter unten unter Bezugnahme auf die Fig. 10 und 11 verwiesen.

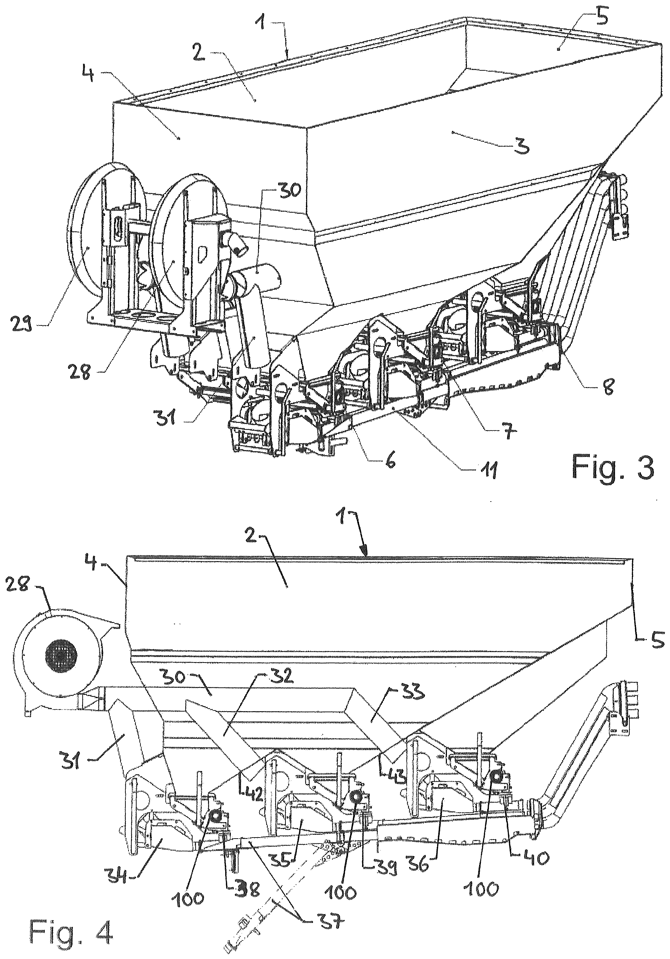

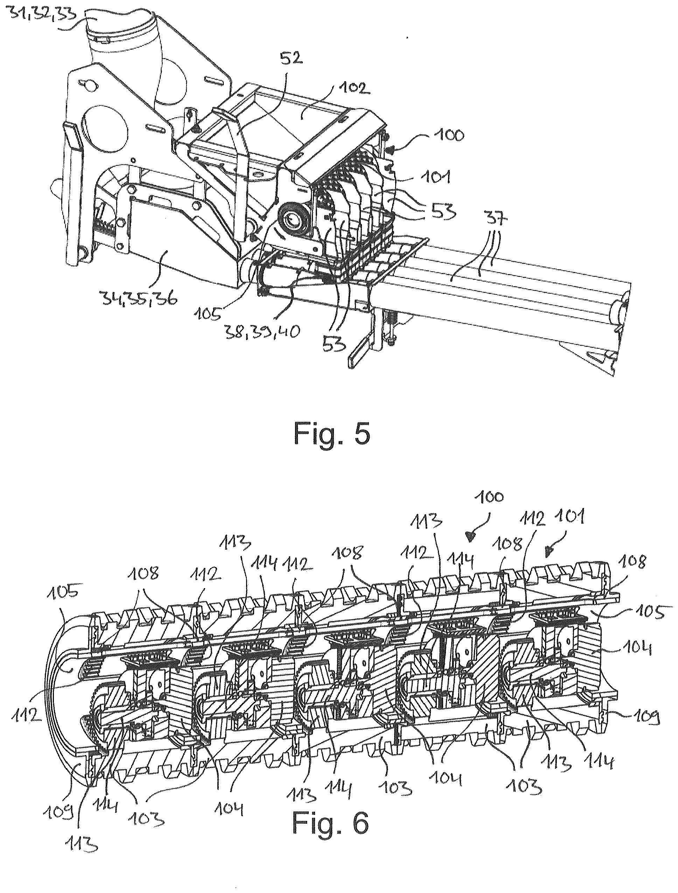

Die Verteilmaschine weist einen Vorratsbehälter 1 zur Aufnahme des Verteilgutes auf, dessen seitlichen 2, 3, vorderen 4 und rückwärtigen Wände 5 sich im unteren Bereich nach innen zu einer Bodenmulde verjüngen, welche beidseits der Längsachse des Vorratsbehälters 1 Auslauföffnungen 6, 7, 8 aufweist, welchen jeweils ein Dosierrad (vgl. das Bezugszeichen 100 der Fig. 4) zugeordnet ist, das weiter unten unter Bezugnahme auf die Fig. 5 bis 9 im Einzelnen erläutert ist. Im vorliegenden Fall sind z.B. jeweils drei, also insgesamt sechs Auslauföffnungen 6, 7, 8 an jeder Seite des Vorratsbehälters 1 vorgesehen, welche mit jeweils einem Dosierrad 100 versehen sind. Die in der Fig. 1 nicht im Einzelnen erkennbaren Dosierräder 100 sind beispielsweise in unterschiedlicher Höhe angeordnet und versorgen jeweils eine Mehrzahl an Förderleitungen mit dem dosierten Verteilgut, wobei die Förderleitungen jeweils zu Paketen zusammengefasst sind und zunächst nach hinten zu einem Hubrahmen 9 geführt und sodann nach außen umgelenkt sind. Der Hubrahmen 9 nimmt die in der Fig. 1 nicht gezeigten Ausleger (vgl. die Fig. 10 und 11) auf, welche sich zu beiden Seiten im Wesentlichen senkrecht zur Fahrtrichtung erstrecken. Jeder Ausleger ist dabei zweckmäßigerweise schwenkbar an dem Hubrahmen 9 angelenkt und mehrgelenkig ausgeführt, so dass einzelne Auslegerabschnitte gemeinsam mit den Förderleitungen aus einer nach außen gestreckten Betriebsposition in eine zusammengeklappte Ruhe- bzw. Fahrtposition angeklappt werden können. Die von den Auslegern aufgenommenen Förderleitungen enden in unterschiedlichen Abständen von der Längsachse der Verteilmaschine an Verteilorganen, welche beispielsweise als Prallteller bzw. Prallplatten ausgestaltet sind, um den aus den Förderleitungen austretenden Verteilgutstrom in jeweils nebeneinander angeordnete Flächenbereiche auf dem Boden zu verteilen (vgl. die Fig. 10 und 11). Stattdessen können die Verteilorgane selbstverständlich auch in beliebiger, als solcher bekannter Weise, wie z.B. in Form von Säscharen oder dergleichen, ausgestaltet sein (nicht gezeigt).

Wie weiterhin der Fig. 1 und insbesondere der Fig. 2 zu entnehmen ist, ist der Vorratsbehälter 1 von einem Tragrahmen aufgenommen, welcher im vorliegenden Fall eine zentrale Strebe 10, z.B. in Form eines Rechteckrohres, aufweist, an dessen Oberseite ein Aufbau 11 festgelegt ist, welcher beispielsweise eine tunnelförmige Gestalt besitzt. Am vorderen Ende der Strebe 10 ist eine Deichsel 12, beispielsweise federnd, angebracht, während am hinteren Ende ein Achsrahmen 13 festgelegt ist. Am hinteren Ende des Aufbaus 11 ist eine Tragkonstruktion angebracht, welche aus Quertraversen 14 sowie diese an ihren Enden verbindenden Seitenwangen 15 gebildet ist. An den beiden Seitenwangen 15 sind Lenker 16, 17 gelagert, welche mit ihrem anderen Ende an dem Hubrahmen 9 angelenkt sind und mittels Hubstützen 18, z.B. in Form von Hydraulikzylindern, den Hubrahmen 9 anheben und absenken können. Die sich nach oben ersteckenden Abschnitte 19 der Seitenwangen 15 stützen mittels ihrer abgeschrägten Enden 20 die geneigte Rückwand 5 des Vorratsbehälters 1 ab. Der beim gezeigten Ausführungsbeispiel tunnelförmige Aufbau 11 weist an seinen Seitenwänden 21 z.B. Montageöffnungen 22, 23 und Halterungen 24 zur Anordnung von Funktionsteilen auf, wobei die Halterungen 24 die weiter unten näher beschriebenen Dosierorgane einschließlich deren Antriebe aufnehmen. Innerhalb des tunnelförmigen Aufbaus 11 können die Versorgungsleitungen, wie Hydraulikleitungen und/oder elektrische Leitungen, verlegt sein. An seiner Oberseite ist der Aufbau 11 nach Art eines nach oben spitz zulaufenden Giebels 25 ausgebildet, welcher gemeinsam mit seinen Seitenwänden 21 eine Trennwand in dem Vorratsbehälter 1 bildet. Der Giebel 25 leitet das in dem Vorratsbehälter 1 befindliche Verteilgut zu den rechts und links hiervon angeordneten Auslauföffnungen 6, 7, 8 des Vorratsbehälters 1 mit den diesen nachgeordneten Dosierrädern 100 ab. An dem Aufbau 25 kann ferner z.B. ein Aufstiegspodest 26 angeordnet sein, welches über eine Leiter zugänglich ist. Ferner ist an der Strebe 10 ein Abstellfuß 27 schwenkbar befestigt.

Wie insbesondere aus den Fig. 3 und 4 hervorgeht, sind vor der Vorderwand 4 des Vorratsbehälters 1 zwei Gebläse 28, 29 angeordnet, welche zur Erzeugung eines Luftförderstromes zum Transport des mittels der Dosierräder 100 dosierten Verteilgutes durch die Förderleitungen dienen und aus Platzgründen beispielsweise mit ihrer Achse quer zur Fahrtrichtung angeordnet sind. Die Druckleitung 30 eines jeden Gebläses 28, 29 ist z.B. durch den Vorratsbehälter 1 hindurch geführt und weist je einen, einem jeden, insgesamt mit dem Bezugseichen 100 versehenen Dosierrad zugeordneten Abgang 31, 32, 33 auf, welcher stromauf eines jeweiligen Dosierrades 100 an einen jeweiligen Luftverteiler 34, 35, 36 mündet, beispielsweise mittels nicht zeichnerisch wiedergegebener Schlauchleitungen. Letzterer teilt die Druckluft auf die einem jeden Dosierrad 100 zugeordnete Anzahl an Förderleitungen 37 auf, von welchen in der Fig. 4 aus Veranschaulichungsgründen nur die vorne liegenden Förderleitungen 37 gezeigt sind. Unmittelbar stromab eines jeden Luftverteilers 34, 35, 36 ist jeder Förderleitung 37 eine Übergabekammer 38, 39, 40 zugeordnet, welche in üblicher Weise mit einem eine Düse und einen Diffusor umfassenden Injektor (nicht gezeigt) ausgestattet sein kann und in welche das dosierte Verteilgut von dem jeweiligen Dosierrad 100 übergeben wird. Während die von dem Gebläse 28 beaufschlagten Förderleitungen 37 in den in Fahrtrichtung linken Ausleger führen, führen die von dem Gebläse 29 versorgten Förderleitungen 37 in den in Fahrtrichtung rechten Ausleger (vgl. auch die Fig. 10 und 11). Die Anzahl an einem jeden Dosierrad 100 zugeordneten Förderleitungen 37 entspricht der relativ großen Breite einer üblichen Teilbreitenschaltung während des Betriebs. Die Förderleitungen 37 können ferner zwischen den Dosierrädern 100 als getrennte Abschnitte ausgebildet sein, um einen Abschnitt derselben, z.B. gemeinsam mit einer jeweiligen Übergabekammer 38, 39, 40, nach unten klappen (vgl. die strichlinierte Darstellung der Fig. 4) und auf diese Weise z.B. den Vorratsbehälter 1 entleeren oder gegebenenfalls eine herkömmliche Abdrehprobe gemäß dem Stand der Technik durchführen zu können.

Die Fig. 5 zeigt eine Detailansicht der pneumatischen Verteilmaschine im Bereich eines ihrer rotierbar angetriebenen Dosierräder 100, welches im vorliegenden Fall beispielsweise nach Art eines Nockenrades 101 ausgestaltet ist, aber je nach Art des Verteilgutes selbstverständlich auch nach Art eines Zellenrades oder in beliebiger anderer bekannter Weise ausgebildet sein kann. Jedes Dosierrad 100 versorgt dabei eine Mehrzahl an - hier fünf - Förderleitungen 37 und ist in einem Dosiergehäuse 102 gelagert, welches unterhalb einer jeweiligen Auslauföffnung 6, 7, 8 des Vorratsbehälters 1 angeordnet ist (siehe oben) und das Verteilgut bis an die Oberfläche des Dosierrades 100 zu leiten vermag. Die Förderleitungen 37 können beispielweise mittels eines Hebels 52 nach unten schwenkbar sein, um den Raum unterhalb des Dosierrades 100 zugänglich zu machen und den Vorratsbehälter 1 entleeren oder gegebenenfalls auch eine herkömmliche Abdrehprobe gemäß dem Stand der Technik durchführen zu können.

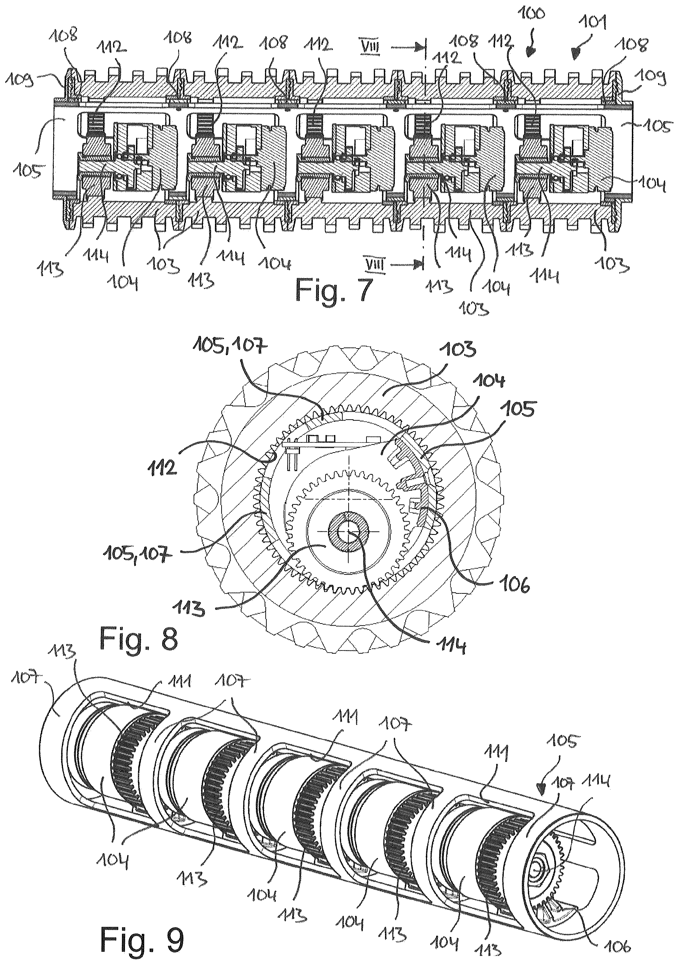

Wie insbesondere den Fig. 6 bis 8 zu entnehmen ist, umfasst ein jedes Dosierrad 100 bei der zeichnerisch wiedergegebenen Ausführungsform eine der Anzahl an Förderleitungen 37, welche von dem Dosierrad 100 versorgt sind, entsprechende Anzahl an - hier fünf - Dosierradsegmenten 103, welche unabhängig voneinander rotierbar angetrieben sind und im Übrigen gegen andersartige Dosierradsegmente, wie z.B. in Form von Nockenradsegmenten unterschiedlicher Geometrie, Zellenradsegmenten etc., austauschbar sein können. Der Rotationsantrieb der Dosierradsegmente 103 des Dosierrades 100 geschieht bei dem gezeigten Ausführungsbeispiel mittels je eines, einem jeweiligen Dosierradsegment 103 zugeordneten, unabhängig voneinander drehzahlsteuer- und/oder regelbaren Elektromotors 104, um sowohl einzelne Dosierradsegmente 103 des Dosierrades 101 stillsetzen als auch die Dosierradsegmente 103 mit unterschiedlichen Rotationsgeschwindigkeiten antreiben zu können. Die zum Antrieb der Dosierradsegmente 103 dienenden Elektromotoren 104 sind im vorliegenden Fall z.B. von je einem als Getriebemotor ausgebildeten bürstenlosen Gleichstrommotors ausgestaltet, können aber grundsätzlich selbstverständlich auch als andersartige Elektro- oder als Hydraulikmotoren zum Einsatz gelangen. Wie insbesondere auch aus der Fig. 9 hervorgeht, sind die Dosierradsegmente 103 des Dosierrades 100 auf einem sich koaxial zu ihrer Drehachse erstreckenden, im Wesentlichen rohrförmigen Hohlkörper 105 gelagert, welcher starr, aber vorzugsweise lösbar, in dem Dosiergehäuse 102 festgelegt ist. Die - hier elektrischen - Antriebe 104 der Dosierradsegmente 104 sind vor äußeren Einwirkungen geschützt im Innern des im Wesentlichen rohrförmigen Hohlkörpers 105 aufgenommen und beispielsweise an Befestigungsflanschen 106 im Innern des Hohlkörpers 105 (vgl. die Fig. 8 und 9) verschraubt. Die Befestigungsflansche 106 können dabei z.B. mit dem Innenumfang des Hohlkörpers 105 verschweißt oder mit diesem verschraubt sein.

Der im Wesentlichen rohrförmige Hohlkörper 105 besitzt eine insgesamt etwa kreiszylindrische Form und umfasst im vorliegenden Fall eine Mehrzahl an in Axialrichtung beabstandeten Abschnitten 107, welche sich um seinen gesamten Umfang erstrecken und zur Aufnahme von an deren Außenumfang aufgebrachten Lagern 108 dienen (vgl. insbesondere die Fig. 6 und 7), mittels welcher ein jedes Dosierradsegment 104 an seinen beiden axialen Enden und in Axialrichtung aneinander angrenzend gelagert ist. Die vollumfänglichen Abschnitte 107 sind dabei einerseits an den beiden Enden des im Wesentlichen rohrförmigen Hohlkörpers 105 vorgesehen, andererseits in äquidistanten Abständen in Axialrichtung desselben, wobei der Axialabstand der vollumfänglichen Abschnitte 107 an die axiale Länge eines jeden Dosierradsegmentes 103 angepasst ist. Die Lager 108 können zwecks Erzielung eines sehr geringen Bauraumes beispielsweise als Gleitlager ausgebildet sein und einerseits eine innere Lagerschale, welche auf dem Außenumfang eines jeweiligen vollumfänglichen Abschnittes 107 des im Wesentlichen rohrförmigen Hohlkörpers 105 sitzt, andererseits eine äußere Lagerschale aufweisen, auf welchen die axialen Enden der Dosierradsegmente 103 sitzen. Die Dosierradsegmente 103 eines jeden Dosierrades 100 sind auf diese Weise von einem Ende des mit den Lagern 108 bestückten Hohlkörpers 105 her in Axialrichtung auf den Hohlkörper 105 aufschiebbar, wobei an den Enden des im Wesentlichen rohrförmigen Hohlkörpers 105 jeweils ein als Widerlager für die Dosierradsegmente 103 dienender Haltering 109 (vgl. die Fig. 6 und 7) vorgesehen sein kann, von welchen zumindest einer lösbar am Außenumfang des Hohlkörpers 105 befestigbar ist, um die Dosierradsegmente 103 axialfest, aber unabhängig voneinander drehbar sowie - wie bereits erwähnt - gegeneinander austauschbar an dem Hohlkörper 105 zu lagern.

Der im Wesentlichen rohrförmige Hohlkörper 105 weist zwischen seinen vollumfänglichen Abschnitten 107 z.B. jeweils eine oder mehrere Durchgangsöffnungen 111 auf, welche im montierten Zustand der Dosierradsegmente 103 von diesen jeweils übergriffen sind. Die Durchgangsöffnungen 111 des Hohlkörpers 105 dienen zur Verbindung eines jeweiligen Antriebs 104 mit einem jeweiligen Dosierradsegment 103, welches zu diesem Zweck eine sich um einen Innenumfangsabschnitt erstreckende Innenverzahnung 112 aufweist (vgl. die Fig. 6 bis 8),die durch eine jeweilige Durchgangsöffnung 111 des Hohlkörpers 105 freigelassen ist. Die Innenverzahnung 112 eines jeweiligen Dosierradsegmentes steht mit je einem Zahnrad 113 im Eingriff, welches auf je einer, zweckmäßigerweise in Bezug auf die Drehachse der Dosierradsegmente 103 exzentrisch angeordneten Abtriebswelle 114 eines jeweiligen Antriebs 104 sitzt (vgl. insbesondere die Fig. 7 und 8). Wie am besten aus der Fig. 9 hervorgeht, ist jeder, beispielsweise aus je einem elektrischen Getriebemotor gebildete Antrieb 104 ferner in einem Gehäuse verkapselt untergebracht, um ihn bestmöglich vor mechanischen Einwirkungen sowie auch vor Schmutz und Feuchtigkeit zu schützen.

Darüber hinaus ist jedem Dosierradsegment 103 eines jeweiligen Dosierrades 100 vorzugsweise ein nicht zeichnerisch dargestellter Positionserfassungssensor, wie ein Drehzahlsensor oder dergleichen, zugeordnet, welcher beispielsweise in einen jeweiligen Motor der Antriebe 104 oder in deren Getriebe integriert sein kann. Sowohl die Sensoren als auch die Antriebe 104 stehen mit einer gleichfalls nicht zeichnerisch wiedergegebenen Steuer- und/oder Regeleinrichtung der Verteilmaschine in Wirkverbindung, um die einzelnen Dosierradsegmente 103 der Dosierräder 100 unabhängig voneinander drehzahlsteuern und/oder -regeln zu können und dabei eine sehr genaue Verteilung des Verteilgutes auf dem Feld gemäß Applikationskarten sicherzustellen, wobei die Position der Verteilmaschine auf dem Feld mittels bekannter Positionserfassungssysteme, wie GPS oder dergleichen, in Echtzeit ermittelt werden kann. Ferner lassen sich lokale Unter- bzw. Überversorgungen des Bodens mit dem Verteilgut aufgrund von Kurvenfahrten oder beim Ein- und Ausschalten der Dosierorgane 100 zu Beginn und zum Abschluss der Verteilarbeit bzw. bei einer jeweiligen Fahrt aus dem Vorgewende hinaus entlang einer Feldfahrgasse bis zum entgegengesetzten Vorgewende in der weiter oben beschriebenen Weise mit sehr hoher Genauigkeit kompensieren.

Um sicherzustellen, dass ein jeweiliges Dosierradsegment 103 des Dosierrades 100 ausschließlich das ihm zugeordnete Verteilorgan versorgt und nicht etwa von benachbarten Dosierradsegmenten 103 bereits dosierte Massenströme an Verteilgut sich teilweise vermischen bzw. in die Übergabekammer 38, 39 40 einer benachbarten Förderleitung 37 gelangen, erweist es sich im Übrigen von Vorteil, wenn einem jeweiligen Dosierrad 100 eine Mehrzahl an Leitblechen 53 (vgl. die Fig. 5) zugeordnet ist, welche in einem der axialen Länge eines jeweiligen Dosierradsegmentes 103 des Dosierrades 100 entsprechenden Abstand voneinander angeordnet sind und sich vom Außenumfang des Dosierrades 100 zwischen jeweils zwei benachbarten Dosierradsegmenten 103 nach unten bis zum oberen Einlass einer jeden Übergabekammer 34, 35, 36 erstrecken. In der Fig. 5 ist auch erkennbar, dass der im Wesentlichen rohrförmige Hohlkörper 105 vorzugsweise an zumindest einem seiner Enden das Dosiergehäuse 102 nach außen durchsetzt, um die in seinem Innern untergebrachten Antriebe 104 von seiner Axialrichtung her elektrisch zu kontaktieren, indem die Versorgungsleitungen gleichfalls im Innern des Hohlkörpers 105 verlegt sind.

In der Fig. 10 ist ein Ausschnitt eines insgesamt mit dem Bezugszeichen 60 versehenen Auslegers - hier: des in Fahrtrichtung betrachtet linken Auslegers 60 - der pneumatischen Verteilmaschine schematisch wiedergegeben, welcher an deren Hubrahmen 9 (vgl. die Fig. 1) schwenkbar befestigt ist. Wie bereits angedeutet, nimmt ein jeder Ausleger 60 eine Mehrzahl der sich an eine jeweilige Übergabekammer 38, 39, 40 anschließenden Förderleitungen 37 des Verteilgutes - üblicherweise die Hälfte aller Förderleitungen 37 - auf, wobei die Förderleitungen 37 in unterschiedlichen Abständen von der Längsachse der Verteilmaschine an Verteilorganen enden, welche im vorliegenden Fall beispielsweise als Prallteller 61 bzw. Prallplatten ausgestaltet sind, um den aus einer jeweiligen Förderleitung 37 austretenden, von einem jeweiligen Dosierradsegment 103 der Dosierorgane 100 dosierten Verteilgutstrom in jeweils nebeneinander angeordnete Flächenbereiche auf dem Boden zu verteilen. In der Fig. 11 ist hierzu exemplarisch die Situation des Normalstreuens gezeigt, bei welchem alle Verteilorgane 61 mittels eines jeweiligen Dosierradsegmentes 103 der Dosierräder 100 mit dem jeweils gewünschten Massenstrom an Verteilgut versorgt werden und die von den Pralltellern 61 jeweils reflektierten Streukegel einander überlappen, um für eine gleichmäßige Querverteilung zu sorgen.

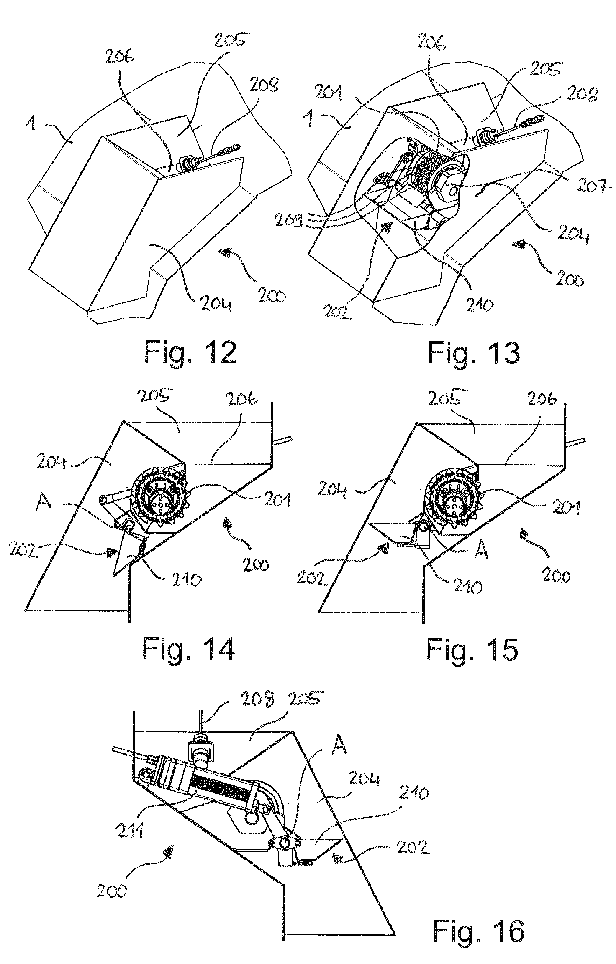

Um zu beliebigen Zeitpunkten vor und/oder während der Verteilarbeit vollautomatisierte Abdrehproben durchführen zu können, ohne eines der Dosierräder 100 hierfür in Anspruch nehmen zu müssen und ohne dass der Bediener manuelle Eingriffe vornehmen muss, weist die Verteilmaschine ferner eine in den Fig. 12 bis 16 schematisch wiedergegebene und insgesamt mit dem Bezugszeichen 200 versehene Kalibrier-Einheit auf, welche, wie insbesondere aus den Fig. 14 und 15 ersichtlich, ein Kalibrier-Dosierrad 201 und eine diesem nachgeordnete Wiegeeinrichtung 202 umfasst, welche beim vorliegenden Ausführungsbeispiel in einem gemeinsamen Kalibrier-Gehäuse 204 untergebracht sind. Die Kalibrier-Einheit 200 ist dabei insbesondere im Innern des Vorratsbehälters 1 der Verteilmaschine angeordnet (vgl. hierzu auch die Fig. 1), beispielsweise unmittelbar oberhalb dessen Auslauföffnungen 6, 7, 8, an welche sich jeweils die Dosierräder 100 anschließen. Die Kalibrier-Einheit 200 kann dabei insbesondere austauschbar an dem Vorratsbehälter 1 festgelegt sein, wie beispielsweise mittels einer im Innern des Vorratsbehälters 1 angebrachten, nicht zeichnerisch erkennbaren mechanischen Tragstruktur, welche ferner ebenfalls zeichnerisch nicht gezeigte elektrische bzw. elektronische Schnittstellen umfasst, um die Kalibrier-Einheit 200 zu kontaktieren. Das Kalibrier-Gehäuse 204 umfasst zweckmäßigerweise eine oberhalb des Kalibrier-Dosierrades 201 angeordnete Einlaufstruktur 205, welche beispielsweise zwei entgegengesetzte, etwa trichterförmig nach innen geneigte Wandungen aufweist, um das in dem Vorratsbehälter 1 befindliche Verteilgut dem Kalibrier-Dosierrad 201 zuzuführen. Im Bereich der einander zugewandten, inneren Enden dieser Wandungen befindet sich vorzugsweise ein Sieb 206, ein Rost oder dergleichen, um zu verhindern, dass in dem Verteilgut möglicherweise enthaltene Verunreinigungen, wie Steine, Erdklumpen etc., ins Innere des Kalibier-Gehäuses 204 gelangen und dem dort drehbar gelagerten Kalibrier-Dosierrad 201 zugeführt werden können. Alternativ zu der zeichnerisch wiedergegebenen Ausführungsform kann das Sieb 206 z.B. auch oberhalb der Einlaufstruktur 205 und vorzugsweise schräg geneigt angeordnet sein, damit Verunreinigungen aufgrund Schwerkraft abgeführt werden und die Einlaufstruktur 205 wieder freigeben und auf diese Weise einen ungehinderten Zulauf an Verteilgut in das Kalibrier-Gehäuse 204 ermöglichen.

Darüber hinaus erstreckt sich das Kalibrier-Gehäuse 204 mit Vorteil bis auf ein Niveau unterhalb - vorzugsweise deutlich unterhalb - der Wiegeeinrichtung 202, um diese von dem in dem Vorratsbehälter 1 enthaltenen Verteilgut freizuhalten und stromab der Wiegeeinrichtung 202 hinreichend Raum für die Kalibrier-Masse an Verteilgut, bevorzugt auch von mehreren Abdrehproben, zur Verfügung zu stellen. In der Fig. 13 ist überdies ein separater Antrieb 207 des Kalibrier-Dosierrades 201 erkennbar, welcher entsprechend jenem der Dosierräder 100 insbesondere elektrischer Bauart ist, aber grundsätzlich auch andersartig, wie z.B. hydraulisch, ausgestaltet sein kann. Ferner können mit Vorteil Sensoren vorgesehen sein, wie im vorliegenden Fall wenigstens ein Füllstandssensor 208, welcher ein etwaiges Leerlaufen des in dem Kalibrier-Gehäuse 204 gelagerten Kalibrier-Dosierrades 201 bei praktisch leerem Vorratsbehälter 1 zu detektieren vermag, sowie wenigstens ein Positionserfassungssensor (nicht dargestellt), wie ein Drehzahlsensor oder dergleichen, welcher beispielsweise in den Antrieb 207 des Kalibrier-Dosierrades 201 integriert sein kann und zur genauen Erfassung der Umdrehungen des Kalibrier-Dosierrades 201 während der Durchführung von Abdrehproben dient. Des Weiteren kann ein - nicht notwendigerweise an der Kalibrier-Einheit 200 angeordneter - Neigungs- oder Winkelsensor (nicht gezeigt) der Verteilmaschine vorgesehen sein, anhand dessen Signalen die Steuer- und/oder Regeleinrichtung bei einer möglichen Schrägstellung der Verteilmaschine bzw. der Kalibrier-Einheit 200 Wiegefehler, wie sie ansonsten bei einer Schrägstellung der Wiegeeinrichtung 202 auftreten könnten, zu kompensieren vermag.

Sowohl das Kalibrier-Dosierrad 201 bzw. dessen Antrieb 207 als auch die Wiegeeinrichtung 202 sowie die vorgenannten Sensoren 208 stehen gleichfalls mit der (nicht zeichnerisch wiedergegebenen) Steuer- und/oder Regeleinrichtung der Verteilmaschine in Wirkverbindung, um das Kalibrier-Dosierrad 201 mittels seines Antriebs 207 zur Durchführung von Abdrehproben mit einer vorherbestimmten Anzahl an Umdrehungen zu rotieren und die hierbei von dem Kalibrier-Dosierrad 201 dosierte Kalibrier-Masse an Verteilgut mittels der Wiegeeinrichtung 202 gravimetrisch zu erfassen. Aus der derart erhaltenen Kalibrier-Masse an Verteilgut bezogen auf die, insbesondere sensorisch erfasste, Anzahl an Umdrehungen des Kalibrier-Dosierrades 201 vermag die Steuer- und/oder Regeleinrichtung eine mittels eines jeweiligen Dosierrades 100 (vgl. die Fig. 5 bis 9) - bzw. hier: mittels eines jeweiligen Dosierradsegmentes 103 des Dosierrades 100 - dosierte Ist-Masse an Verteilgut bezogen auf die Anzahl an Umdrehungen des jeweiligen Dosierrades 100 - bzw. hier: eines jeweiligen Dosierradsegmentes 103 des Dosierrades 100 - zu bestimmen, so dass die Drehzahl eines jeweiligen Dosierrades 100 - bzw. hier: eines jeweiligen Dosierradsegmentes 103 des Dosierrades 100 - bezogen auf die Anzahl von dessen Umdrehungen auf den jeweiligen Soll-Massenstrom an Verteilgut gesteuert und/oder geregelt werden kann. Zu diesem Zweck kann bzw. können in der Steuer- und/oder Regeleinrichtung insbesondere eine oder mehrere funktionale Beziehung(en), beispielsweise in Form von Kennlinien, -kurven, -feldern oder dergleichen, hinterlegt sein, um die mittels des Kalibrier-Dosierrades 102 dosierte Kalibrier-Masse an Verteilgut bezogen auf die Anzahl an Umdrehungen des Kalibrier-Dosierrades 102 in die mittels eines jeweiligen Dosierrades 100 - bzw. hier: mittels eines jeweiligen Dosierradsegmentes 103 eines jeweiligen Dosierrades 100 - dosierte Ist-Masse an Verteilgut bezogen auf die Anzahl an Umdrehungen des Dosierrades 100 - bzw. hier: eines jeweiligen Dosierradsegmentes 103 des Dosierrades 100 - umzurechnen. Wie als solches aus dem Stand der Technik bekannt, ist bzw. sind in der Steuer- und/oder Regeleinrichtung ferner wenigstens eine oder mehrere funktionale Beziehung(en) hinterlegt, welche die Abhängigkeit des mittels eines jeweiligen Dosierrades 100 - bzw. hier: mittels eines jeweiligen Dosierradsegmentes 103 eines jeweiligen Dosierrades 100 - dosierten Massenstroms an Verteilgut von der Drehzahl des jeweiligen Dosierrades 100 - bzw. hier: eines jeweiligen Dosierradsegmentes 103 des Dosierrades 100 - wiedergibt, um die Drehzahl eines jeweiligen Dosierrades 100 - bzw. hier: eines jeweiligen Dosierradsegmentes 103 des jeweiligen Dosierrades 100 - auf den Soll-Massenstrom an Verteilgut zu steuern und/oder zu regeln.

Wie am besten in der Fig. 13 erkennbar, umfasst das Kalibrier-Dosierrad 201 bei dem gezeigten Ausführungsbeispiel ein oder mehrere Kalibier-Dosierradsegmente 209, welche z.B. in Form von Kalibrier-Nockenradsegmenten ausgestaltet sind, welche mit den Nockenradsegmenten 101 der Dosierräder 100 identisch sein oder auch eine demgegenüber verschiedene Geometrie, wie beispielsweise einen anderen Durchmesser, aufweisen können, wobei derartige Geometrieunterschiede in der oben genannten funktionalen Beziehung berücksichtigt sind. Das oder die Kalibrier-Dosierradsegment(e) 209 des Kalibrier-Dosierrades 201 kann bzw. können ferner gegen andere Kalibrier-Dosierradsegmente, wie z.B. in Form von Zellenrädern (nicht gezeigt), austauschbar sein, um sehr unterschiedlichen Geometrien des Kalibrier-Dosierrades 201 gegenüber den eigentlichen Dosierrädern 100 Rechnung zu tragen, wobei in der Steuer- und/oder Regeleinrichtung für ein jeweiliges Paar einerseits von Kalibrier-Dosierrädern 201, andererseits von Dosierrädern 100 zumindest eine funktionale Beziehung hinterlegt ist, um aus der mittels des jeweiligen Kalibrier-Dosierradsegmentes 209 des Kalibrier-Dosierrades 201 anlässlich der Abdrehprobe erhaltenen Kalibrier-Masse an Verteilgut bezogen auf die Anzahl an Umdrehungen des Kalibrier-Dosierradsegmentes 209 die mittels eines jeweiligen Dosierradsegmentes 103 eines jeweiligen Dosierrades 100 dosierte Ist-Masse an Verteilgut bezogen auf die Anzahl an Umdrehungen des jeweiligen Dosierradsegmentes 103 bestimmen zu können. Stattdessen kann es sich bei dem Kalibrier-Dosierrad 201 bzw. bei dessen Kalibrier-Dosierradsegmenten 209 jedoch auch um standardisierte Kalibrier-Dosierradsegmente handeln, welche zur Durchführung von Abdrehproben unabhängig von der Geometrie der eigentlichen Dosierräder 100 Verwendung finden, wobei in diesem Fall in der Steuer- und/oder Regeleinrichtung verschiedene funktionale Beziehungen hinterlegt sind, um aus der mittels des Standard-Kalibrier-Dosierradsegmentes des Kalibrier-Dosierrades 201 anlässlich von Abdrehproben erhaltenen Kalibrier-Masse an Verteilgut bezogen auf die Anzahl an Umdrehungen des Standard-Kalibrier-Dosierradsegmentes die mittels des jeweiligen Dosierradsegmentes 103 der Dosierräder 100 dosierten Ist-Masse an Verteilgut bezogen auf die Anzahl an Umdrehungen des jeweiligen Dosierrades 100 zu bestimmen. Die "richtige" funktionale Beziehung zwischen dem standardisierten Kalibrier-Dosierrad 201 und dem jeweils verwendeten eigentlichen Dosierrad 100 bzw. dessen Dosierradsegmenten 103 kann dann entweder manuell, z.B. durch eine entsprechende Eingabe in die Steuer- und/oder Regelrichtung, oder vorzugsweise automatisch, z.B. mittels geeigneter Sensoren, RFID-Transpondern etc., ausgewählt werden.

Wie sich des Weiteren aus den Fig. 13 bis 16 ergibt, ist die dem Kalibrier-Dosierrad 201 nachgeordnete Wiegeeinrichtung im vorliegenden Fall zur chargenweisen gravimetrischen Erfassung der anlässlich der Durchführung von Abdrehproben dosierten Kalibrier-Masse an Verteilgut ausgebildet und umfasst einen stromab bzw. unterhalb des Kalibrier-Dosierrades 201 angeordneten Wiegebehälter 210, welcher vorzugsweise zumindest innenseitig mit einer reflexionsmindernden Beschichtung versehen ist, um zu verhindern, dass anlässlich einer Abdrehprobe auftreffende Verteilgutpartikel aus dem Wiegebehälter 210 heraus reflektiert werden. Der Wiegebehälter 210 ist beispielsweise um eine Schwenkachse A schwenkbar gelagert und mittels eines Entleermechanismus' zwischen einer Aufnahmestellung (Fig. 13, 15 und 16) und einer Entleerstellung (Fig. 14) hin und her bewegbar. Während die Aufnahmestellung des Wiegebehälters 210 zum Auffangen der während einer Abdrehprobe dosierten Verteilgutpartikel dient, dient die Entleerstellung zum anschließenden Entleeren des Wiegebehälters 210 oder auch zum Verwerfen von im Vorfeld einer Abdrehprobe mittels des Kalibrier-Dosierrades 201 dosierten Verteilgutpartikeln, um sicherzustellen, dass während der gesamten Abdrehprobe das Kalibrier-Dosierrad 201 vollständig mit Verteilgutpartikeln befüllt ist. Wie der Fig. 16 zu entnehmen ist, umfasst der Entleermechanismus des Wiegebehälters 210 der Wiegeeinrichtung 202 beispielsweise einen zu dessen Betätigung gleichfalls mit der Steuer- und/oder Regeleinrichtung (nicht gezeigt) in Wirkverbindung stehenden Aktor 211, z.B. in Form einer Kolben-/Zylindereinheit, vorzugsweise eines Elektrozylinders. In diesem Zusammenhang sei allerdings darauf hingewiesen, dass die Wiegeeinrichtung 202 auch andersartig, wie beispielsweise zur kontinuierlichen gravimetrischen Erfassung der anlässlich von Abdrehproben mittels des Kalibrier-Dosierrades 201 dosierten Kalibrier-Masse an Verteilgut ausgestaltet sein kann, wobei die Wiegeeinrichtung z.B. nach Art einer Prallplatten-, Rutschen-, Bandwaage oder dergleichen, ausgebildet sein kann.

## Patentansprüche

1. Verfahren zur Steuerung und/oder Regelung wenigstens eines Dosierrades (100) einer Verteilmaschine, umfassend
- wenigstens ein drehangetriebenes Dosierrad (100);
- wenigstens ein dem Dosierrad (100) nachgeordnetes Verteilorgan (61) zum Verteilen des mittels des Dosierrades (100) dosierten Verteilgutes auf oder in den Boden; und
- wenigstens eine mit dem Dosierrad (100) in Wirkverbindung stehende Steuer- und/oder Regeleinrichtung, welche zur Steuerung und/oder Regelung der Drehzahl des Dosierrades (100) gemäß einem vorherbestimmbaren Soll-Massenstrom an Verteilgut ausgebildet ist, wobei wenigstens eine Abdrehprobe durchgeführt wird, um den mittels des wenigstens einen Dosierrades (100) dosierten Ist-Massenstrom an Verteilgut auf den Soll-Massenstrom an Verteilgut zu steuern und/oder zu regeln, **dadurch gekennzeichnet, dass** die Abdrehprobe an einem separaten, drehangetriebenen Kalibrier-Dosierrad (201) mit einer diesem nachgeordneten Wiegeeinrichtung (202) durchgeführt wird, wobei
- das Kalibrier-Dosierrad (201) mit einer vorherbestimmten Anzahl an Umdrehungen rotiert und die mittels des Kalibrier-Dosierrades (201) während dieser Abdrehprobe dosierte Kalibrier-Masse an Verteilgut gravimetrisch erfasst wird,
- die derart erhaltene Kalibrier-Masse an Verteilgut bezogen auf die Anzahl an Umdrehungen des Kalibrier-Dosierrades (201) an die Steuer- und/oder Regeleinrichtung übermittelt wird, um hieraus die mittels des wenigstens einen Dosierrades (100) dosierte Ist-Masse an Verteilgut bezogen auf die Anzahl an Umdrehungen des wenigstens einen Dosierrades (100) zu bestimmen, und
- die Drehzahl des wenigstens einen Dosierrades (100) mittels der Steuer- und/oder Regeleinrichtung in Abhängigkeit von dieser Ist-Masse an Verteilgut bezogen auf die Anzahl an Umdrehungen des wenigstens einen Dosierrades (100) auf den Soll-Massenstrom an Verteilgut gesteuert und/oder geregelt wird.

2. Verfahren nach Anspruch 1, **dadurch gekennzeichnet, dass** in der Steuer- und/oder Regeleinrichtung
- wenigstens eine funktionale Beziehung hinterlegt wird, um die mittels des Kalibrier-Dosierrades (201) dosierte Kalibrier-Masse an Verteilgut bezogen auf die Anzahl an Umdrehungen des Kalibrier-Dosierrades (201) in die mittels des wenigstens einen Dosierrades (100) dosierte Ist-Masse an Verteilgut bezogen auf die Anzahl an Umdrehungen des Dosierrades (100) umzurechnen; und/oder
- wenigstens eine funktionale Beziehung hinterlegt wird, welche die Abhängigkeit des mittels des wenigstens einen Dosierrades (100) dosierten Massenstroms an Verteilgut von der Drehzahl des wenigstens einen Dosierrades (100) wiedergibt, um die Drehzahl des wenigstens einen Dosierrades (100) auf den Soll-Massenstrom an Verteilgut zu steuern und/oder zu regeln.

3. Verfahren nach Anspruch 1 oder 2, **dadurch gekennzeichnet, dass** das wenigstens eine Dosierrad (100) eine Mehrzahl an mittels der Steuer- und/oder Regeleinrichtung unabhängig voneinander drehangetriebenen Dosierradsegmenten (103) aufweist, wobei die Drehzahl eines jeweiligen Dosierradsegmentes (103) in Abhängigkeit von der für eine jeweilige, mittels eines jeweiligen Dosierradradsegmentes (103) dosierten Ist-Masse an Verteilgut bezogen auf die Anzahl an Umdrehungen des Dosierradsegmentes (103) auf den jeweiligen Soll-Massenstrom an Verteilgut gesteuert und/oder geregelt wird.

4. Verfahren nach einem der Ansprüche 1 bis 3, **dadurch gekennzeichnet, dass** das wenigstens eine Dosierrad (100) verschiedene und/oder gegeneinander austauschbare Dosierradsegmente (103) unterschiedlicher Geometrie aufweist, wobei das Kalibrier-Dosierrad (201)
- verschiedene und/oder gegeneinander austauschbare Kalibrier-Dosierradsegmente (209) aufweist, wobei zur Durchführung der Abdrehprobe jeweils das dem jeweiligen Dosierradsegment (103) des Dosierrades (100) entsprechende Kalibrier-Dosierradsegment (209) verwendet wird, um die mittels des jeweiligen Kalibrier-Dosierradsegmentes (209) des Kalibrier-Dosierrades (201) anlässlich der Abdrehprobe erhaltene Kalibrier-Masse an Verteilgut bezogen auf die Anzahl an Umdrehungen des Kalibrier-Dosierradsegmentes (209) an die Steuer- und/oder Regeleinrichtung zu übermitteln und hieraus die mittels des jeweiligen Dosierradsegmentes (103) des Dosierrades (100) dosierte Ist-Masse an Verteilgut bezogen auf die Anzahl an Umdrehungen des jeweiligen Dosierradsegmentes (103) zu bestimmen; oder
- wenigstens ein Standard-Kalibrier-Dosierradsegment (209) aufweist, welches zur Durchführung der Abdrehproben verwendet wird, um die mittels des Standard-Kalibrier-Dosierradsegmentes (209) des Kalibrier-Dosierrades (201) anlässlich der Abdrehprobe erhaltene Kalibrier-Masse an Verteilgut bezogen auf die Anzahl an Umdrehungen des Standard-Kalibrier-Dosierradsegmentes (209) an die Steuer-und/oder Regeleinrichtung zu übermitteln und hieraus die mittels des jeweiligen Dosierradsegmentes (103) des Dosierrades (100) dosierte Ist-Masse an Verteilgut bezogen auf die Anzahl an Umdrehungen des jeweiligen Dosierradsegmentes (103) zu bestimmen,
wobei die Drehzahl des jeweiligen Dosierradsegmentes (103) des Dosierrades (100) mittels der Steuer- und/oder Regeleinrichtung in Abhängigkeit von dieser Ist-Masse an Verteilgut bezogen auf die Anzahl an Umdrehungen des jeweiligen Dosierradsegmentes (103) des Dosierrades (100) auf den Soll-Massenstrom an Verteilgut gesteuert und/oder geregelt wird.

5. Verfahren nach einem der Ansprüche 1 bis 4, **dadurch gekennzeichnet, dass** die mittels des Kalibrier-Dosierrades (201) während der Abdrehprobe dosierte Kalibrier-Masse an Verteilgut nach ihrer gravimetrischen Erfassung in einen Vorratsbehälter (1) der Verteilmaschine überführt wird, wobei die Abdrehprobe insbesondere im Innern des Vorratsbehälters (1) durchgeführt und die Kalibrier-Masse an Verteilgut dem Vorratsbehälter (1) entnommen wird.

6. Verfahren nach einem der Ansprüche 1 bis 5, **dadurch gekennzeichnet, dass** bei der Steuerung und/oder Regelung der Drehzahl des wenigstens einen Dosierrades (100) auf den Soll-Massenstrom an Verteilgut in Abhängigkeit von der Ist-Masse an Verteilgut bezogen auf die Anzahl an Umdrehungen des Dosierrades (100) ferner wenigstens ein Verteilparameter aus der Gruppe
- Arbeitsbreite,
- Fahrgeschwindigkeit und
- Soll-Verteilungsmenge pro Fläche an der jeweiligen Ist-Position der Verteilmaschine
berücksichtigt wird.

7. Verfahren nach einem der Ansprüche 1 bis 6, **dadurch gekennzeichnet, dass** vor der Durchführung der Abdrehprobe das Kalibrier-Dosierrad (201) zunächst mit einer vorgegebenen Anzahl an Umdrehungen rotiert und das hierbei dosierte Verteilgut verworfen wird, um für die anschließende Abdrehprobe das Dosiervolumen des Kalibrier-Dosierrades (201) im Wesentlichen vollständig zu befüllen.

8. Verfahren nach einem der Ansprüche 1 bis 7, **dadurch gekennzeichnet, dass**
- eine Mehrzahl an Abdrehproben nach, insbesondere voreinstellbaren, Zeiträumen durchgeführt wird; und/oder
- wenigstens eine Abdrehprobe bedarfsweise durchgeführt wird, indem ein entsprechender Befehl in ein Bedienterminal der Steuer- und/oder Regeleinrichtung eingegeben wird,
wobei insbesondere zumindest die anlässlich der zuletzt durchgeführten Abdrehprobe bestimmte Ist-Masse an Verteilgut bezogen auf die Anzahl an Umdrehungen des Dosierrades (100) gespeichert wird.

9. Verfahren nach einem der Ansprüche 1 bis 8, **dadurch gekennzeichnet, dass** die Steuer- und/oder Regeleinrichtung ein Bedienterminal und eine Anzeigeeinrichtung aufweist, um
- das Ergebnis einer jeweiligen Abdrehprobe auf der Anzeigeeinrichtung anzuzeigen; und/oder
- wenigstens eine aktualisierte funktionale Beziehung, welche die Abhängigkeit der mittels des wenigstens einen Dosierrades (100) dosierten Ist-Masse an Verteilgut bezogen auf die Anzahl an Umdrehungen des wenigstens einen Dosierrades (100) von der mittels des Kalibrier-Dosierrades (201) dosierten Kalibrier-Masse an Verteilgut bezogen auf die Anzahl an Umdrehungen des Kalibrier-Dosierrades (201) beschreibt, in die Steuer- und/oder Regeleinrichtung einzugeben und dort zu hinterlegen, sofern sich die hierfür in der Steuer- und/oder Regeleinrichtung bereits hinterlegte funktionale Beziehung, insbesondere infolge Verschleißes des wenigstens einen Dosierrades (100) und/oder des Kalibrier-Dosierrades (201), verändert hat.

10. Verteilmaschine, umfassend
- wenigstens ein drehangetriebenes Dosierrad (100);
- wenigstens ein dem Dosierrad (100) nachgeordnetes Verteilorgan (61) zum Verteilen des mittels des Dosierrades (100) dosierten Verteilgutes auf oder in den Boden; und
- wenigstens eine mit dem Dosierrad (100) in Wirkverbindung stehende Steuer- und/oder Regeleinrichtung, welche zur Steuerung und/oder Regelung der Drehzahl des Dosierrades (100) gemäß einem vorherbestimmbaren Soll-Massenstrom an Verteilgut ausgebildet ist, **dadurch gekennzeichnet, dass** die Verteilmaschine ein separates, drehangetriebenes Kalibrier-Dosierrad (201) und eine dem separaten Kalibier-Dosierrad (201) nachgeordnete Wiegeeinrichtung (202) aufweist, welche mit der Steuer- und/oder Regeleinrichtung in Verbindung stehen, um
- das Kalibrier-Dosierrad (201) zur Durchführung von Abdrehproben mit einer vorherbestimmten Anzahl an Umdrehungen zu rotieren und die mittels des Kalibrier-Dosierrades (201) während einer solchen Abdrehprobe dosierte Kalibier-Masse an Verteilgut mittels der Wiegeeinrichtung (202) gravimetrisch zu erfassen,
- aus der derart erhaltenen Kalibrier-Masse an Verteilgut bezogen auf die Anzahl an Umdrehungen des Kalibrier-Dosierrades (201) die mittels des wenigstens einen Dosierrades (100) dosierte Ist-Masse an Verteilgut bezogen auf die Anzahl an Umdrehungen des wenigstens einen Dosierrades (100) mittels der Steuer- und/oder Regeleinrichtung zu bestimmen, und
- die Drehzahl des wenigstens einen Dosierrades (100) in Abhängigkeit von dieser Ist-Masse an Verteilgut bezogen auf die Anzahl an Umdrehungen des wenigstens einen Dosierrades (100) auf den Soll-Massenstrom an Verteilgut zu steuern und/oder zu regeln.

11. Verteilmaschine nach Anspruch 10, **dadurch gekennzeichnet, dass** in der Steuer- und/oder Regeleinrichtung
- wenigstens eine funktionale Beziehung hinterlegt ist, um die mittels des Kalibrier-Dosierrades (201) dosierte Kalibrier-Masse an Verteilgut bezogen auf die Anzahl an Umdrehungen des Kalibrier-Dosierrades (201) in die mittels des wenigstens einen Dosierrades (100) dosierte Ist-Masse an Verteilgut bezogen auf die Anzahl an Umdrehungen des Dosierrades (100) umzurechnen; und/oder
- wenigstens eine funktionale Beziehung hinterlegt ist, welche die Abhängigkeit des mittels des wenigstens einen Dosierrades (100) dosierten Massenstroms an Verteilgut von der Drehzahl des wenigstens einen Dosierrades (100) wiedergibt, um die Drehzahl des wenigstens einen Dosierrades (100) auf den Soll-Massenstrom an Verteilgut zu steuern und/oder zu regeln.

12. Verteilmaschine nach Anspruch 10 oder 11, **dadurch gekennzeichnet, dass** das wenigstens eine Dosierrad (100) eine Mehrzahl an mittels der Steuer- und/oder Regeleinrichtung unabhängig voneinander drehangetriebenen Dosierradsegmenten (103) aufweist, wobei die Steuer- und/oder Regeleinrichtung zur Steuerung und/oder Regelung der Drehzahl eines jeweiligen Dosierradsegmentes (103) auf den jeweiligen Soll-Massenstrom an Verteilgut in Abhängigkeit von der für eine jeweilige, mittels eines jeweiligen Dosierradsegmentes (103) dosierten Ist-Masse an Verteilgut bezogen auf die Anzahl an Umdrehungen des Dosierradsegmentes (103) ausgebildet ist.

13. Verteilmaschine nach einem der Ansprüche 10 bis 12, **dadurch gekennzeichnet, dass** das wenigstens eine Dosierrad (100) verschiedene und/oder gegeneinander austauschbare Dosierradsegmente (103) unterschiedlicher Geometrie aufweist, wobei das Kalibrier-Dosierrad (201)
- verschiedene und/oder gegeneinander austauschbare Kalibrier-Dosierradsegmente (209) aufweist, wobei die Steuer- und/oder Regeleinrichtung anlässlich der Durchführung der Abdrehprobe zur Auswahl des dem jeweiligen Dosierradsegment (103) des Dosierrades (100) entsprechenden Kalibrier-Dosierradsegmentes (209) ausgebildet ist, um aus der mittels des jeweiligen Kalibrier-Dosierradsegmentes (209) des Kalibrier-Dosierrades (201) anlässlich der Abdrehprobe erhaltenen Kalibrier-Masse an Verteilgut bezogen auf die Anzahl an Umdrehungen des Kalibrier-Dosierradsegmentes (209) die mittels des jeweiligen Dosierradsegmentes (103) des wenigstens einen Dosierrades (100) dosierte Ist-Masse an Verteilgut bezogen auf die Anzahl an Umdrehungen des jeweiligen Dosierradsegmentes (103) zu bestimmen; oder
- wenigstens ein Standard-Kalibrier-Dosierradsegment (209) aufweist, um aus der mittels des Standard-Kalibrier-Dosierradsegmentes (209) des Kalibrier-Dosierrades (201) anlässlich der Abdrehprobe erhaltenen Kalibrier-Masse an Verteilgut bezogen auf die Anzahl an Umdrehungen des Standard-Kalibrier-Dosierradsegmentes (209) die mittels des jeweiligen Dosierradsegmentes (103) des wenigstens einen Dosierrades (100) dosierte Ist-Masse an Verteilgut bezogen auf die Anzahl an Umdrehungen des jeweiligen Dosierradsegmentes (103) zu bestimmen,
wobei die Steuer- und/oder Regeleinrichtung ferner zur Steuerung und/oder Regelung der Drehzahl des jeweiligen Dosierradsegmentes (103) des Dosierrades (100) in Abhängigkeit von dieser Ist-Masse an Verteilgut bezogen auf die Anzahl an Umdrehungen des jeweiligen Dosierradsegmentes (103) des Dosierrades (100) auf den Soll-Massenstrom an Verteilgut ausgebildet ist.

14. Verteilmaschine nach einem der Ansprüche 10 bis 13, **dadurch gekennzeichnet, dass** das Kalibrier-Dosierrad (201) und die Wiegeeinrichtung (202) im Innern eines Vorratsbehälters (1) der Verteilmaschine angeordnet sind, an dessen wenigstens eine Auslauföffnung (6, 7, 8) sich das wenigstens eine Dosierrad (100) anschließt.

15. Verteilmaschine nach einem der Ansprüche 10 bis 14, **dadurch gekennzeichnet, dass** das Kalibrier-Dosierrad (201) und die Wiegeeinrichtung (202) in einem Kalibrier-Dosiergehäuse (204) angeordnet sind, welches insbesondere
- eine auf einem Niveau oberhalb des Kalibrier-Dosierrades (201) angeordnete Einlaufstruktur (205) aufweist und/oder
- sich bis auf ein Niveau unterhalb der Wiegeeinrichtung (202) erstreckt.

16. Verteilmaschine nach einem der Ansprüche 10 bis 15, **dadurch gekennzeichnet, dass** die Wiegeeinrichtung (202)
- zur chargenweise gravimetrischen Erfassung der anlässlich der Abdrehprobe dosierten Kalibrier-Masse an Verteilgut ausgebildet ist und einen stromab des Kalibrier-Dosierrades (201) angeordneten Wiegebehälter (210) aufweist, welcher insbesondere mittels eines mit der Steuer- und/oder Regeleinrichtung in Wirkverbindung stehenden Aktors (211) nach Durchführung der Abdrehprobe entleerbar ist; oder
- zur kontinuierlichen gravimetrischen Erfassung der anlässlich der Abdrehprobe dosierten Kalibrier-Masse an Verteilgut ausgebildet ist, wobei die Wiegeeinrichtung (202) insbesondere als Prallplatten-, Rutschen- oder Bandwaage ausgebildet ist.

## Claims

1. Method for the control and/or regulation of at least one metering wheel (100) of a spreading machine, comprising
- at least one rotationally driven metering wheel (100) ;
- at least one spreading element (61) arranged downstream of the metering wheel (100) for spreading the material for spreading, which is metered by means of the metering wheel (100), onto or into the ground; and
- at least one control and/or regulating device which is operatively connected to the metering wheel (100) and is designed for the control and/or regulation of the rotational speed of the metering wheel (100) in accordance with a predeterminable setpoint mass flow of material for spreading,
wherein at least one calibration test is performed in order to control and/or regulate the actual mass flow of material for spreading, which is metered by means of the at least one metering wheel (100), to the setpoint mass flow of material for spreading, **characterized in that** the calibration test is performed by means of a separate, rotationally driven calibration metering wheel (201) with a weighing device (202) arranged downstream thereof, wherein
- the calibration metering wheel (201) is rotated with a predetermined number of revolutions, and the calibration mass of material for spreading metered by means of the calibration metering wheel (201) during said calibration test is gravimetrically detected,
- the calibration mass of material for spreading, which is obtained in such a way, in relation to the number of revolutions of the calibration metering wheel (201) is transmitted to the control and/or regulating device in order to determine therefrom the actual mass of material for spreading, which is metered by means of the at least one metering wheel (100), in relation to the number of revolutions of the at least one metering wheel (100), and
- the rotational speed of the at least one metering wheel (100) is controlled and/or regulated to the setpoint mass flow of material for spreading by means of the control and/or regulating device depending on said actual mass of material for spreading in relation to the number of revolutions of the at least one metering wheel (100).

2. Method according to Claim 1, **characterized in that** in the control and/or regulating device
- at least one functional relationship is stored in order to convert the calibration mass of material for spreading, which is metered by means of the calibration metering wheel (201), in relation to the number of revolutions of the calibration metering wheel (201) into the actual mass of material for spreading, which is metered by means of the at least one metering wheel (100), in relation to the number of revolutions of the metering wheel (100); and/or
- at least one functional relationship is stored which reproduces the dependency of the mass flow of material for spreading, which is metered by means of the at least one metering wheel (100), on the rotational speed of the at least one metering wheel (100) in order to control and/or regulate the rotational speed of the at least one metering wheel (100) to the setpoint mass flow of material for spreading.

3. Method according to Claim 1 or 2, **characterized in that** the at least one metering wheel (100) has a plurality of metering wheel segments (103) which are rotationally driven independently of one another by means of the control and/or regulating device, wherein the rotational speed of a respective metering wheel segment (103) is controlled and/or regulated to the respective setpoint mass flow of material for spreading depending on the respective actual mass of material for spreading, which is metered by means of a respective metering wheel segment (103), in relation to the number of revolutions of the metering wheel segment (103).

4. Method according to one of Claims 1 to 3, **characterized in that** the at least one metering wheel (100) has different and/or mutually interchangeable metering wheel segments (103) of differing geometry, wherein the calibration metering wheel (201)
- has different and/or mutually interchangeable calibration metering wheel segments (209), wherein, in order to perform the calibration test, use is in each case made of the calibration metering wheel segment (209) corresponding to the respective metering wheel segment (103) of the metering wheel (100) in order to transmit the calibration mass of spreading material, which is obtained by means of the respective calibration metering wheel segment (209) of the calibration metering wheel (201) during the calibration test, in relation to the number of revolutions of the calibration metering wheel segment (209) to the control and/or regulating device and to determine therefrom the actual mass of material for spreading, which is metered by means of the respective metering wheel segment (103) of the metering wheel (100), in relation to the number of revolutions of the respective metering wheel segment (103); or
- has at least one standard calibration metering wheel segment (209) which is used for performing the calibration tests in order to transmit the calibration mass of material for spreading, which is obtained by means of the standard calibration metering wheel segment (209) of the calibration metering wheel (201) during the calibration test, in relation to the number of revolutions of the standard calibration metering wheel segment (209) to the control and/or regulating device and to determine therefrom the actual mass of material for spreading, which is metered by means of the respective metering wheel segment (103) of the metering wheel (100), in relation to the number of revolutions of the respective metering wheel segment (103),
wherein the rotational speed of the respective metering wheel segment (103) of the metering wheel (100) is controlled and/or regulated to the setpoint mass flow of material for spreading by means of the control and/or regulating device depending on said actual mass of material for spreading in relation to the number of revolutions of the respective metering wheel segment (103) of the metering wheel (100).

5. Method according to one of Claims 1 to 4, **characterized in that** the calibration mass of material for spreading, which is metered by means of the calibration metering wheel (201) during the calibration test, is transferred after its gravimetric detection into a storage container (1) of the spreading machine, wherein the calibration test is performed in particular in the interior of the storage container (1) and the calibration mass of material for spreading is removed from the storage container (1).

6. Method according to one of Claims 1 to 5, **characterized in that**, in the control and/or regulation of the rotational speed of the at least one metering wheel (100) to the setpoint mass flow of material for spreading depending on the actual mass of material for spreading in relation to the number of revolutions of the metering wheel (100), furthermore at least one spreading parameter from the group comprising
- working width,
- travelling speed and
- setpoint spreading rate per area at the respective actual position of the spreading machine
is taken into consideration.

7. Method according to one of Claims 1 to 6, **characterized in that**, before the calibration test is performed, first of all the calibration metering wheel (201) rotates with a predetermined number of revolutions and the material for spreading metered in the process is discarded in order, for the subsequent calibration test, to substantially completely fill the metering volume of the calibration metering wheel (201).

8. Method according to one of Claims 1 to 7, **characterized in that**
- a plurality of calibration tests is performed after, in particular presettable, periods of time; and/or
- at least one calibration test is performed as required by a corresponding command being input into an operating terminal of the control and/or regulating device,
wherein in particular at least the actual mass of material for spreading, which is determined during the calibration test performed last, in relation to the number of revolutions of the metering wheel (100) is stored.

9. Method according to one of Claims 1 to 8, **characterized in that** the control and/or regulating device has an operating terminal and a display device in order
- to display the result of a respective calibration test on the display device; and/or
- in order to input at least one updated functional relationship, which describes the dependency of the actual mass of material for spreading, which is metered by means of the at least one metering wheel (100), in relation to the number of revolutions of the at least one metering wheel (100) on the calibration mass of material for spreading, which is metered by means of the calibration metering wheel (201), in relation to the number of revolutions of the calibration metering wheel (201), into the control and/or regulating device and to store it there if the functional relationship which is already stored for it in the control and/or regulating device has changed, in particular due to wear of the at least one metering wheel (100) and/or the calibration metering wheel (201) .

10. Spreading machine, comprising
- at least one rotationally driven metering wheel (100) ;
- at least one spreading element (61), which is arranged downstream of the metering wheel (100), for spreading the material for spreading, which is metered by means of the metering wheel (100), onto or into the ground; and
- at least one control and/or regulating device which is operatively connected to the metering wheel (100) and is designed for the control and/or regulation of the rotational speed of the metering wheel (100) in accordance with a predeterminable setpoint mass flow of material for spreading,
**characterized in that** the spreading machine has a separate, rotationally driven calibration metering wheel (201) and a weighing device (202) which is arranged downstream of the separate calibration metering wheel (201), which are connected to the control and/or regulating device in order
- to rotate the calibration metering wheel (201) with a predetermined number of revolutions for performing calibration tests and to gravimetrically detect the calibration mass of material for spreading, which is metered by means of the calibration metering wheel (201) during such a calibration test, by means of the weighing device (202),
- to determine from the calibration mass of material for spreading, which is obtained in such a way, in relation to the number of revolutions of the calibration metering wheel (201) the actual mass of material for spreading, which is metered by means of the at least one metering wheel (100), in relation to the number of revolutions of the at least one metering wheel (100) by means of the control and/or regulating device, and
- to control and/or regulate the rotational speed of the at least one metering wheel (100) to the setpoint mass flow of material for spreading depending on said actual mass of material for spreading in relation to the number of revolutions of the at least one metering wheel (100) .

11. Spreading machine according to Claim 10, **characterized in that** in the control and/or regulating device
- at least one functional relationship is stored in order to convert the calibration mass of material for spreading, which is metered by means of the calibration metering wheel (201), in relation to the number of revolutions of the calibration metering wheel (201) into the actual mass of material for spreading, which is metered by means of the at least one metering wheel (100), in relation to the number of revolutions of the metering wheel (100); and/or
- at least one functional relationship is stored which reproduces the dependency of the mass flow of material for spreading, which is metered by means of the at least one metering wheel (100), on the rotational speed of the at least one metering wheel (100) in order to control and/or regulate the rotational speed of the at least one metering wheel (100) to the setpoint mass flow of material for spreading.

12. Spreading machine according to Claim 10 or 11, **characterized in that** the at least one metering wheel (100) has a plurality of metering wheel segments (103) which are rotationally driven independently of one another by means of the control and/or regulating device, wherein the control and/or regulating device is designed for the control and/or regulation of the rotational speed of a respective metering wheel segment (103) to the respective setpoint mass flow of material for spreading depending on the respective actual mass of material for spreading, which is metered for by means of a respective metering wheel segment (103), in relation to the number of revolutions of the metering wheel segment (103).

13. Spreading machine according to one of Claims 10 to 12, **characterized in that** the at least one metering wheel (100) has different and/or mutually interchangeable metering wheel segments (103) of differing geometry, wherein the calibration metering wheel (201)
- has different and/or mutually interchangeable calibration metering wheel segments (209), wherein the control and/or regulating device is designed, during the performance of the calibration test, to select the calibration metering wheel segment (209) corresponding to the respective metering wheel segment (103) of the metering wheel (100) in order from the calibration mass of material for spreading, which is obtained by means of the respective calibration metering wheel segment (209) of the calibration metering wheel (201) during the calibration test, in relation to the number of revolutions of the calibration metering wheel segment (209) to determine the actual mass of material for spreading, which is metered by means of the respective metering wheel segment (103) of the at least one metering wheel (100), in relation to the number of revolutions of the respective metering wheel segment (103); or
- has at least one standard calibration metering wheel segment (209) in order from the calibration mass of material for spreading, which is obtained by means of the standard calibration metering wheel segment (209) of the calibration metering wheel (201) during the calibration test, in relation to the number of revolutions of the standard calibration metering wheel segment (209) to determine the actual mass of material for spreading, which is metered by means of the respective metering wheel segment (103) of the at least one metering wheel (100), in relation to the number of revolutions of the respective metering wheel segment (103),
wherein the control and/or regulating device is furthermore designed for control and/or regulation of the rotational speed of the respective metering wheel segment (103) of the metering wheel (100), depending on said actual mass of spreading material in relation to the number of revolutions of the respective metering wheel segment (103) of the metering wheel (100), to the setpoint mass flow of material for spreading.

14. Spreading machine according to one of Claims 10 to 13, **characterized in that** the calibration metering wheel (201) and the weighing device (202) are arranged in the interior of a storage container (1) of the spreading machine, the at least one metering wheel (100) adjoining at least one outlet opening (6, 7, 8) of said storage container.

15. Spreading machine according to one of Claims 10 to 14, **characterized in that** the calibration metering wheel (201) and the weighing device (202) are arranged in a calibration metering housing (204) which in particular
- has an inlet structure (205) arranged at a level above the calibration metering wheel (201), and/or
- extends to a level below the weighing device (202) .

16. Spreading machine according to one of Claims 10 to 15, **characterized in that** the weighing device (202)
- is designed for batchwise gravimetric detection of the calibration mass of material for spreading, which is metered during the calibration test, and has a weighing container (210) which is arranged downstream of the calibration metering wheel (201) and which, after the calibration test has been performed, can be emptied in particular by means of an actuator (211) that is operatively connected to the control and/or regulating device; or
- is designed for the continuous gravimetric detection of the calibration mass of material for spreading, which is metered during the calibration test, wherein the weighing device (202) is in particular in the form of a baffle plate weigher, chute weigher or belt weigher.

## Revendications

1. Procédé de commande et/ou de régulation d'au moins une roue de dosage (100) d'une machine d'épandage, comprenant :
- au moins une roue de dosage entraînée en rotation (100) ;
- au moins un organe d'épandage (61) placé en aval de la roue de dosage (100) en vue d'épandre le produit à épandre dosé à l'aide de la roue de dosage (100) sur ou dans le sol ; et
- au moins un dispositif de commande et/ou de régulation en liaison active avec la roue de dosage (100) qui est réalisé pour commander et/ou réguler la vitesse de rotation de la roue de dosage (100) en fonction d'un débit massique théorique de produit à épandre pouvant être prédéterminé ;
au moins un test d'étalonnage étant réalisé pour commander et/ou régler le débit massique réel de produit à épandre dosé à l'aide de l'au moins une roue de dosage (100) par rapport au débit massique théorique de produit à épandre, **caractérisé en ce que** le test d'étalonnage est réalisé au niveau d'une roue de dosage-étalonnage (201) entraînée en rotation séparée avec un dispositif de pesée (202) placé en aval de ladite roue ; dans lequel :
- la roue de dosage-étalonnage (201) tourne à une vitesse de rotation prédéfinie et la masse étalonnée de produit à épandre dosée pendant ce test d'étalonnage à l'aide de la roue de dosage-étalonnage (201) est déterminée de façon gravimétrique ;
- la masse étalonnée de produit à épandre obtenue de cette façon sur le nombre tours de la roue de dosage-étalonnage (201) est transmise au dispositif de commande et/ou de régulation, pour en déduire la masse réelle de produit à épandre dosée à l'aide de l'au moins une roue de dosage (100) par rapport au nombre de tours de l'au moins une roue de dosage (100) ; et
- la vitesse de rotation de l'au moins une roue de dosage (100) est commandée et/ou réglée à l'aide du dispositif de commande et/ou de régulation sur le débit massique théorique de produit à épandre en fonction de cette masse réelle de produit à épandre par rapport au nombre de tours de l'au moins une roue de dosage (100).

2. Procédé selon la revendication 1, **caractérisé en ce que** dans le dispositif de commande et/ou de régulation :
- au moins une relation fonctionnelle est mémorisée pour calculer la masse étalonnée de produit à épandre dosée à l'aide de la roue de dosage-étalonnage (201) par rapport au nombre de tours de la roue de dosage-étalonnage (201) dans la masse réelle de produit à épandre dosée à l'aide de l'au moins une roue de dosage (100) par rapport au nombre de tours de la roue de dosage (100) ; et/ou
- au moins une relation fonctionnelle est mémorisée qui reproduit la relation du débit massique de produit à épandre dosé à l'aide de l'au moins une roue de dosage (100) par rapport à la vitesse de rotation de l'au moins une roue de dosage (100) pour commander et/ou réguler la vitesse de rotation de l'au moins une roue de dosage (100) sur le débit massique théorique de produit à épandre.

3. Procédé selon la revendication 1 ou 2, **caractérisé en ce que** l'au moins une roue de dosage (100) comporte une pluralité de segments de roue de dosage (103) entraînés en rotation indépendamment les uns des autres à l'aide du dispositif de commande et/ou de régulation, la vitesse de rotation d'un segment de roue de dosage (103) respectif étant commandé et/ou réglé en fonction de la masse réelle de produit à épandre dosée à l'aide d'un segment de roue de dosage (103) par rapport au nombre de tours de segment de roue de dosage (103) sur le débit massique théorique de produit à épandre respectif.

4. Procédé selon l'une quelconque des revendications 1 à 3, **caractérisé en ce que** l'au moins une roue de dosage (100) comporte des segments de roue de dosage (103) différents et/ou interchangeables de différentes formes, la roue de dosage-étalonnage (201) :
- comportant des segments de roue de dosage-étalonnage (209) différents et/ou interchangeables, le segment de roue de dosage-étalonnage (209) correspondant respectivement au segment de roue de dosage (103) respectif de la roue de dosage (100) étant utilisé pour réaliser le test d'étalonnage, afin de transmettre au dispositif de commande et/ou de régulation la masse étalonnée de produit à épandre obtenue à l'occasion du test d'étalonnage à l'aide du segment de roue de dosage-étalonnage (209) respectif de la roue de dosage-étalonnage (201) par rapport au nombre de tours du segment de roue de dosage-étalonnage (209) et d'en déduire la masse réelle de produit à épandre dosée à l'aide du segment de roue de dosage (103) respectif de la roue de dosage (100) par rapport au nombre de tours du segment de roue de dosage (103) respectif ; ou
- comportant au moins un segment de roue de dosage-étalonnage standard (209) qui est utilisé pour réaliser les tests d'étalonnage afin de transmettre au dispositif de commande et/ou de régulation la masse étalonnée de produit à épandre obtenue à l'aide du segment de roue de dosage-étalonnage standard (209) de la roue de dosage-étalonnage (201) à l'occasion du test d'étalonnage par rapport au nombre de tours du segment de roue de dosage-étalonnage standard (209) et d'en déduire la masse réelle de produit à épandre dosée à l'aide du segment de roue de dosage (103) respectif de la roue de dosage (100) par rapport au nombre de tours du segment de roue de dosage (103) respectif ;
la vitesse de rotation du segment de roue de dosage (103) respectif de la roue de dosage (100) étant commandée et/ou réglée sur le débit massique théorique de produit à épandre à l'aide du dispositif de commande et/ou de régulation en fonction de cette masse réelle de produit à épandre par rapport au nombre de tours du segment de roue de dosage (103) respectif de la roue de dosage (100).

5. Procédé selon l'une quelconque des revendications 1 à 4, **caractérisé en ce que** la masse étalonnée de produit à épandre dosée à l'aide de la roue de dosage-étalonnage (201) pendant le test d'étalonnage est transférée, après sa détermination gravimétrique, dans un bac de réserve (1) de la machine d'épandage, le test d'étalonnage étant notamment réalisé à l'intérieur du bac de réserve (1) et la masse étalonnée de produit à épandre étant prélevée à partir du bac de réserve (1).

6. Procédé selon l'une quelconque des revendications 1 à 5, **caractérisé en ce que** lors de la commande et/ou de la régulation de la vitesse de rotation de l'au moins une roue de dosage (100) sur le débit massique théorique de produit à épandre en fonction de la masse réelle de produit à épandre par rapport au nombre de tours de la roue de dosage (100), au moins un paramètre d'épandage appartenant au groupe suivant est pris en compte :
- largeur de travail ;
- vitesse de conduite ; et
- quantité d'épandage théorique par surface au niveau de la position réelle respective de la machine d'épandage.

7. Procédé selon l'une quelconque des revendications 1 à 6, **caractérisé en ce qu'**avant la réalisation du test d'étalonnage, la roue de dosage-étalonnage (201) est d'abord amenée à tourner à une vitesse de rotation prédéfinie et que le produit à épandre dosé ici est éjecté, pour remplir pour l'essentiel entièrement le volume de dosage de la roue de dosage-étalonnage (201) pour le test d'étalonnage suivant.

8. Procédé selon l'une quelconque des revendications 1 à 7, **caractérisé en ce que** :
- une pluralité de tests d'étalonnage est réalisée après des laps de temps notamment préréglables ; et/ou
- au moins un test d'étalonnage est réalisé si besoin en entrant un ordre correspondant dans un terminal de commande du dispositif de commande et/ou de régulation ;
notamment au moins la masse réelle de produit à épandre déterminée à l'occasion du test d'étalonnage précédent réalisé est mémorisée par rapport au nombre de tours de la roue de dosage (100).

9. Procédé selon l'une quelconque des revendications 1 à 8, **caractérisé en ce que** le dispositif de commande et/ou de régulation comporte un terminal de commande et un dispositif d'affichage pour :
- afficher le résultat d'un test d'étalonnage respectif sur le dispositif d'affichage ; et/ou
- entrer dans le dispositif de commande et/ou de régulation et y mettre en mémoire au moins une relation fonctionnelle actualisée qui décrit la relation de la masse réelle de produit à épandre dosée à l'aide de l'au moins une roue de dosage (100) par rapport au nombre de tours de l'au moins une roue de dosage (100) de la masse étalonnée de produit à épandre dosée à l'aide de la roue de dosage-étalonnage (201) par rapport au nombre de tours de la roue de dosage-étalonnage (201), dans la mesure où la relation fonctionnelle déjà mémorisée à cette fin dans le dispositif de commande et/ou de régulation a changé, notamment en raison de l'usure de l'au moins une roue de dosage (100) et/ou de la roue de dosage-étalonnage (201).

10. Machine d'épandage, comprenant :
- au moins une roue de dosage entraînée en rotation (100) ;
- au moins un organe d'épandage (61) placé en aval de la roue de dosage (100) afin d'épandre le produit à épandre dosé à l'aide de la roue de dosage (100) sur ou dans le sol ; et
- au moins un dispositif de commande et/ou de régulation en liaison active avec la roue de dosage (100) qui est réalisé pour commander et/ou réguler la vitesse de rotation de la roue de dosage (100) en fonction d'un débit massique théorique de produit à épandre pouvant être prédéterminé ;
**caractérisée en ce que** la machine d'épandage comporte une roue de dosage-étalonnage (201) entraînée en rotation séparée et un dispositif de pesée (202) placé en aval de la roue de dosage-étalonnage (201) séparée qui sont reliées au dispositif de commande et/ou de régulation ;
pour :
- faire tourner la roue de dosage-étalonnage (201) à une vitesse de rotation prédéfinie afin de réaliser les tests d'étalonnage et de déterminer de façon gravimétrique à l'aide de la roue de dosage-étalonnage (201) la masse étalonnée de produit à épandre dosée pendant un tel test d'étalonnage à l'aide du dispositif de pesée (202) ;
- déterminer, à partir de la masse étalonnée de produit à épandre ainsi obtenue par rapport au nombre de tours de la roue de dosage-étalonnage (201), la masse réelle de produit à épandre dosée à l'aide de l'au moins une roue de dosage (100) par rapport au nombre de tours de l'au moins une roue de dosage (100) à l'aide du dispositif de commande et/ou de régulation ; et
- commander et/ou réguler la vitesse de rotation de l'au moins une roue de dosage (100) en fonction de cette masse réelle de produit à épandre par rapport au nombre de tours de l'au moins une roue de dosage (100) sur le débit massique théorique de produit à épandre.

11. Machine d'épandage selon la revendication 10, **caractérisée en ce que** dans le dispositif de commande et/ou de régulation :
- au moins une relation fonctionnelle est mémorisée pour calculer la masse étalonnée de produit à épandre dosée à l'aide de la roue de dosage-étalonnage (201) par rapport au nombre de tours de la roue de dosage-étalonnage (201) dans la masse réelle de produit à épandre dosée à l'aide de l'au moins une roue de dosage (100) par rapport au nombre de tours de la roue de dosage (100) ; et/ou
- au moins une relation fonctionnelle est mémorisée qui reproduit la relation du débit massique de produit à épandre dosé à l'aide de l'au moins une roue de dosage (100) depuis la vitesse de rotation de l'au moins une roue de dosage (100) pour commander et/ou réguler la vitesse de rotation de l'au moins une roue de dosage (100) sur le débit massique théorique de produit à épandre.

12. Machine d'épandage selon la revendication 10 ou 11, **caractérisée en ce que** l'au moins une roue de dosage (100) comporte une pluralité de segments de roue de dosage (103) entraînés en rotation indépendamment les uns des autres à l'aide du dispositif de commande et/ou de régulation, le dispositif de commande et/ou de régulation étant réalisé pour commander et/ou réguler la vitesse de rotation d'un segment de roue de dosage (103) respectif sur le débit massique théorique respectif de produit à épandre en fonction de la masse réelle de produit à épandre dosée à l'aide d'un segment de roue de dosage (103) respectif par rapport au nombre de tours du segment de roue de dosage (103).

13. Machine d'épandage selon l'une quelconque des revendications 10 à 12, **caractérisée en ce que** l'au moins une roue de dosage (100) comporte des segments de roue de dosage (103) différents et/ou interchangeables de géométries différentes, la roue de dosage-étalonnage (201) :
- comportant des segments de roue de dosage-étalonnage (209) différents et/ou interchangeables, le dispositif de commande et/ou de régulation étant réalisé à l'occasion de la réalisation du test d'étalonnage en vue de sélectionner le segment de roue de dosage-étalonnage (209) correspondant au segment de roue de dosage (103) respectif de la roue de dosage (100) pour déterminer à partir de la masse étalonnée de produit à épandre obtenue à l'aide du segment de roue de dosage-étalonnage respectif (209) de la roue de dosage-étalonnage (201) à l'occasion du test d'étalonnage, par rapport au nombre de tours du segment de roue de dosage-étalonnage (209), la masse réelle de produit à épandre dosée à l'aide du segment de roue de dosage (103) respectif de l'au moins une roue de dosage (100) par rapport au nombre de tours du segment de roue de dosage (103) respectif ; ou
- comporte au moins un segment de roue de dosage-étalonnage standard (209) pour déterminer, à partir de la masse étalonnée de produit à épandre obtenue à l'aide du segment de roue de dosage-étalonnage standard (209) de la roue de dosage-étalonnage (201) à l'occasion du test d'étalonnage, par rapport au nombre de tours du segment de roue de dosage-étalonnage standard (209), la masse réelle de produit à épandre dosée à l'aide du segment de roue de dosage (103) respectif de l'au moins une roue de dosage (100) par rapport au nombre de tours du segment de roue de dosage (103) respectif ;
le dispositif de commande et/ou de régulation étant en outre réalisé pour commander et/ou réguler la vitesse de rotation du segment de roue de dosage (103) respectif de la roue de dosage (100) en fonction de cette masse réelle de produit à épandre par rapport au nombre de tours du segment de roue de dosage (103) respectif de la roue de dosage (100) sur le débit massique théorique de produit à épandre.

14. Machine d'épandage selon l'une quelconque des revendications 10 à 13, **caractérisée en ce que** la roue de dosage-étalonnage (201) et le dispositif de pesée (202) sont disposés à l'intérieur d'un bac de réserve (1) de la machine d'épandage au niveau de l'ouverture d'évacuation (6, 7, 8) de laquelle l'au moins une roue de dosage (100) est raccordée.

15. Machine d'épandage selon l'une quelconque des revendications 10 à 14, **caractérisée en ce que** la roue de dosage-étalonnage (201) et le dispositif de pesée (202) sont disposés dans un carter de dosage-étalonnage (204) :
- qui comporte notamment une structure d'admission (205) disposée sur un niveau prévu au-dessus de la roue de dosage-étalonnage (201) ; et/ou
- qui s'étend notamment jusqu'à un niveau en dessous du dispositif de pesée (202).

16. Machine d'épandage selon l'une quelconque des revendications 10 à 15, **caractérisée en ce que** le dispositif de pesée (202) :
- est réalisé pour la détermination gravimétrique de la masse étalonnée de produit à épandre dosée à l'occasion du test d'étalonnage et comporte un bac de pesée (210) disposé en aval de la roue de dosage-étalonnage (201) qui peut notamment être vidé à l'aide d'un actionneur (211) en liaison active avec le dispositif de commande et/ou de régulation après la réalisation du test d'étalonnage ; ou
- est réalisé pour la détermination gravimétrique en continu de la masse étalonnée de produit à épandre dosée à l'occasion du test d'étalonnage, le dispositif de pesée (202) étant notamment réalisé sous la forme d'une balance à plaques déflectrices, à glissement ou à courroie.
